(19) 

**Europäisches Patentamt**
**European Patent Office**
**Office européen des brevets**

(11) **EP 4 353 415 A1**

(12) **EUROPEAN PATENT APPLICATION**
published in accordance with Art. 153(4) EPC

(43) Date of publication:
**17.04.2024  Bulletin 2024/16**

(21) Application number: **22819876.8**

(22) Date of filing: **17.03.2022**

(51) International Patent Classification (IPC):
**B25B 23/14** *(2006.01)*    **G05B 19/418** *(2006.01)*

(52) Cooperative Patent Classification (CPC):
**B25B 21/00; B25B 23/14; G05B 19/418**

(86) International application number:
**PCT/JP2022/012370**

(87) International publication number:
**WO 2022/259686 (15.12.2022 Gazette 2022/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:  **08.06.2021   JP 2021096178**

(71) Applicant: **Panasonic Holdings Corporation
Osaka 571-8501 (JP)**

(72) Inventors:
• **NAKAMURA, Atsushi
  Osaka 571-0057 (JP)**
• **SAWADA, Norio
  Osaka 571-0057 (JP)**
• **HASHIMOTO, Koichi
  Osaka 571-0057 (JP)**

(74) Representative: **Müller-Boré & Partner
Patentanwälte PartG mbB
Friedenheimer Brücke 21
80639 München (DE)**

(54) **TOOL SYSTEM, ASSESSMENT SYSTEM, ASSESSMENT METHOD, AND PROGRAM**

(57)    The problem to be overcome by the present disclosure is to improve the accuracy of a decision made about the life. A tool system (1) includes a fastening unit (24), a sensor unit (27), a storage device (35), and a decider (34). The fastening unit (24) fastens a fastening member by driving a tip tool in rotation with motive power supplied from a motor (243). The sensor unit (27) detects a physical quantity while the fastening unit (24) is performing a fastening operation on the fastening member. The storage device (35) stores criterion information. The criterion information has been set based on a criterion correlation between a plurality of criterion feature quantities which are a plurality of feature quantities of multiple different types and used as criteria for making a decision about life of the fastening unit (24). The decider (34) makes the decision about the life of the fastening unit (24) in accordance with not only the criterion information but also an actually measured correlation. The actually measured correlation is a correlation between a plurality of actually measured feature quantities, which are a plurality of feature quantities respectively corresponding to the multiple different types of the plurality of criterion feature quantities and are based on the physical quantity detected by the sensor unit (27).

FIG. 1A

FIG. 1B

**Description**

**Technical Field**

The present disclosure generally relates to a tool system, a decision system, a decision method, and a program. More particularly, the present disclosure relates to a tool system including a fastening unit for fastening a fastening member, and also relates to a decision system, a decision method, and a program.

**Background Art**

Patent Literature 1 discloses an operations management system including a tool and a smart terminal functioning as an operations management device. The smart terminal communicates, via a communications interface thereof, with the tool, thereby making an operation information acquirer thereof collect, from the tool, operation information (such as a fastening torque measured value) indicating the specifics of the operation that has been performed on a member as a work target. In addition, the smart terminal also makes a location information acquirer thereof acquire, based on positioning data of a GPS receiver, location information of the workplace. This operations management system achieves the advantage of enabling making management to check what types of operations have been performed on respective work targets.

**Citation List**

**Patent Literature**

Patent Literature 1: JP 2016-91316 A

**Summary of Invention**

Meanwhile, a fastening unit (which may be included in a tool, for example) for use to fasten a fastening member such as a bolt may have a particular part thereof gradually worn down as the fastening unit is repeatedly used to perform the fastening operations a number of times. In that case, the wear may cause a decline in fastening torque. That is why it is important to make more accurate management of the life of the fastening unit.

In view of the foregoing background, it is therefore an object of the present disclosure to provide a tool system, a decision system, a decision method, and a program, all of which contribute to improving the accuracy of a decision made about the life.

A tool system according to an aspect of the present disclosure includes a fastening unit, a sensor unit, a storage device, and a decider. The fastening unit fastens a fastening member by driving a tip tool in rotation with motive power supplied from a motor. The sensor unit detects a physical quantity while the fastening unit is performing a fastening operation on the fastening member. The storage device stores criterion information. The criterion information has been set based on a criterion correlation between a plurality of criterion feature quantities. The plurality of criterion feature quantities are a plurality of feature quantities of multiple different types and used as criteria for making a decision about life of the fastening unit. The decider makes the decision about the life of the fastening unit in accordance with the criterion information and an actually measured correlation. The actually measured correlation is a correlation between a plurality of actually measured feature quantities. The plurality of actually measured feature quantities are a plurality of feature quantities respectively corresponding to the multiple different types of the plurality of criterion feature quantities and are based on the physical quantity detected by the sensor unit.

A decision system according to another aspect of the present disclosure includes an acquirer, a storage device, and a decider. The acquirer acquires a physical quantity while a tool is performing a fastening operation on a fastening member. The tool includes a fastening unit that fastens the fastening member by driving a tip tool in rotation with motive power supplied from a motor. The storage device stores criterion information. The criterion information has been set based on a criterion correlation between a plurality of criterion feature quantities. The plurality of criterion feature quantities are a plurality of feature quantities of multiple different types and are used as criteria for making a decision about life of the fastening unit. The decider makes the decision about the life of the fastening unit in accordance with the criterion information and an actually measured correlation. The actually measured correlation is a correlation between a plurality of actually measured feature quantities. The plurality of actually measured feature quantities are a plurality of feature quantities respectively corresponding to the multiple different types of the plurality of criterion feature quantities and are based on the physical quantity acquired by the acquirer.

A decision method according to still another aspect of the present disclosure is to be applied to a tool including a fastening unit that fastens a fastening member by driving a tip tool in rotation with motive power supplied from a motor.

The decision method includes acquisition processing and decision processing. The acquisition processing includes acquiring a physical quantity while the tool is performing a fastening operation on the fastening member. The decision processing includes making a decision about life of the fastening unit in accordance with criterion information and an actually measured correlation. The criterion information has been set based on a criterion correlation between a plurality of criterion feature quantities. The plurality of criterion feature quantities are a plurality of feature quantities of multiple different types and are used as criteria for making the decision about the life of the fastening unit. The actually measured correlation is a correlation between a plurality of actually measured feature quantities. The plurality of actually measured feature quantities are a plurality of feature quantities respectively corresponding to the multiple different types of the plurality of criterion feature quantities and are based on the physical quantity acquired in the acquisition processing.

A program according to still another aspect of the present disclosure is designed to cause one or more processors to perform the decision method described above.

**Brief Description of Drawings**

FIG. 1A is a schematic block diagram of a tool system according to an exemplary embodiment;
FIG. 1B is a perspective view of a hammer and an anvil which are provided inside a tool included in the tool system and which may be abraded;
FIG. 2A is a perspective view illustrating the appearance of the tool as viewed from the front side;
FIG. 2B is a perspective view illustrating the appearance of the tool as viewed from the rear side;
FIG. 3 is a schematic representation showing physical quantities to be acquired by the tool system;
FIG. 4A is a schematic representation illustrating, as a two-dimensional graph, the concept of a decision range for the tool system;
FIG. 4B is a schematic representation illustrating, as a two-dimensional graph different from the one shown in FIG. 4A, the concept of a decision range for the tool system;
FIG. 5 is a sequence chart illustrating how the tool system operates;
FIG. 6 is a flowchart illustrating how the tool operates;
FIG. 7 is a flowchart illustrating how a decision device operates in the tool system; and
FIG. 8 is a schematic block diagram of a tool according to a variation.

**Description of Embodiments**

A preferred embodiment of the present disclosure will now be described in detail with reference to the accompanying drawings. In the following description of embodiments, any pair of constituent elements having the same function will be designated by the same reference numeral and description thereof will be omitted herein to avoid redundancy. Note that the embodiment to be described below is only an exemplary one of various embodiments of the present disclosure and should not be construed as limiting. Rather, the exemplary embodiment may be readily modified in various manners depending on a design choice or any other factor without departing from the scope of the present disclosure. The drawings to be referred to in the following description of embodiments are all schematic representations. Thus, the ratio of the dimensions (including thicknesses) of respective constituent elements illustrated on the drawings does not always reflect their actual dimensional ratio.

(1) Overview

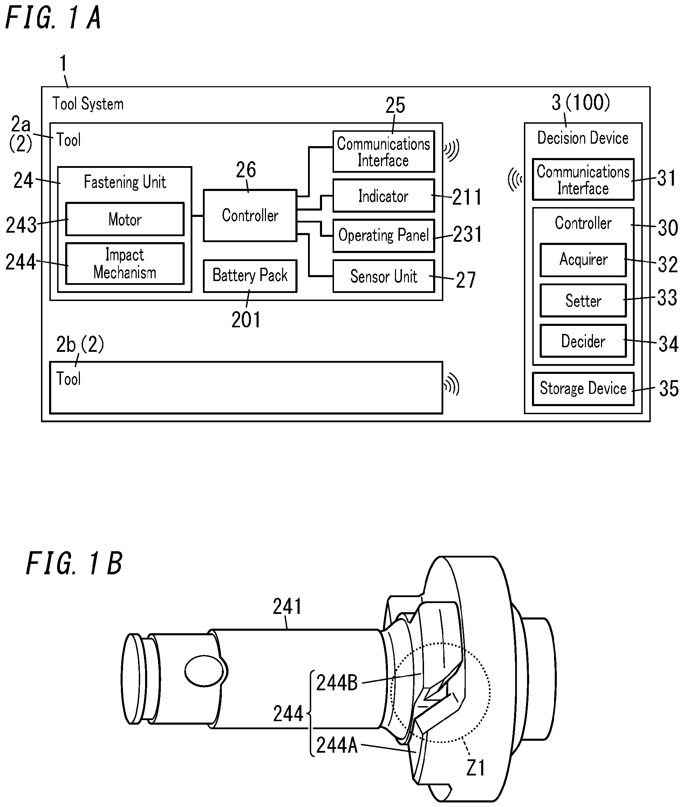

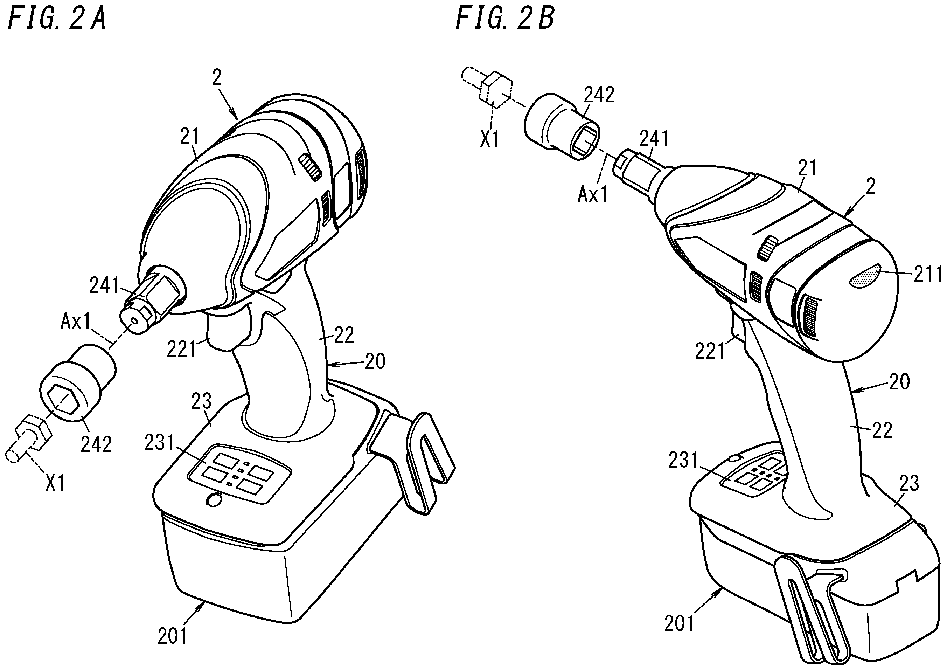

First, an overview of a tool system 1 according to an exemplary embodiment will be described with reference to FIGS. 1A, 1B, and 2.
As shown in FIG. 1A, the tool system 1 according to this embodiment includes a fastening unit 24, a sensor unit 27, a storage device 35, and a decider 34.
The fastening unit 24 fastens a fastening member X1 by driving a tip tool (such as a socket 242) in rotation with motive power supplied from a motor 243. The fastening unit 24 is supposed to be, for example, provided for a portable tool 2 (such as a handheld tool). The fastening unit 24 includes the motor 243, for example. The fastening unit 24 is activated with electric power supplied from a battery pack 201, for example. The tool 2 may be, for example, an impact wrench and the fastening unit 24 includes an impact mechanism 244 that performs an impact operation of applying impacting force to a tip tool such as the socket 242 (refer to FIG. 2). Making a person who uses the tool 2 (hereinafter referred to as a "user") use the tool 2 allows a fastening member X1 (such as a bolt or a nut) to be attached to a workpiece (e.g., a target such as a metal plate with a screw hole) as a work target, for example. Note that the tool system 1 does not have to include such a portable tool 2 including the fastening unit 24 but may also include a piece of non-portable equipment (such as a screw tightening robot) including the fastening unit 24.

The sensor unit 27 detects a physical quantity while the fastening unit 24 is performing a fastening operation on the fastening member X1. The sensor unit 27, as well as the fastening unit 24, is supposed to be provided for the portable tool 2 as an example. As used herein, the "fastening operation" refers to the operation performed by the fastening unit 24 from a point in time when the fastening unit 24 starts fastening one fastening member X1 through a point in time when the fastening unit 24 finishes fastening the fastening member X1 (or a point in time when the fastening unit 24 cannot help stopping fastening the fastening member X1 due to shortage of torque caused by wear of the fastening unit 24 as will be described later). That is to say, if the fastening unit 24 has fastened a plurality of fastening members X1 one after another, this means that the fastening unit 24 has performed a plurality of fastening operations sequentially.

The storage device 35 stores criterion information. The criterion information has been set based on a criterion correlation between a plurality of criterion feature quantities. The plurality of criterion feature quantities are a plurality of feature quantities of multiple different types and are used as criteria for making a decision about the life of the fastening unit 24. The storage device 35 may be, for example, provided for a decision device 3, which is provided as a different device from the tool 2. In this embodiment, the decision device 3 is supposed to be a communications device which may be installed at a workplace (e.g., a construction site) or in a facility (e.g., a factory) where either a single tool 2 or a plurality of tools 2 are used.

The decider 34 makes the decision about the life of the fastening unit 24 in accordance with not only the criterion information but also an actually measured correlation. The actually measured correlation is a correlation between a plurality of actually measured feature quantities. The plurality of actually measured feature quantities are a plurality of feature quantities respectively corresponding to the multiple different types of the plurality of criterion feature quantities and are based on the physical quantity detected by the sensor unit 27. The decider 34, as well as the storage device 35, may be, for example, provided for the decision device 3 that is provided as a different device from the tool 2.

In this embodiment, the decision device 3 acquires, by, for example, communicating with the tool 2, the physical quantity while the fastening unit 24 of the tool 2 is fastening the fastening member X1. Then, the decision device 3 extracts, from the physical quantity thus acquired, a plurality of actually measured feature quantities of multiple different types. Examples of the plurality of actually measured feature quantities may include the average value of the battery voltage during the fastening operation (as a first feature quantity) and the number of impacts applied for revolution during an impact operation (as a second feature quantity). Making the decision device 3 extract a plurality of actually measured feature quantities allows the actually measured correlation to be obtained as the correlation between a plurality of actually measured feature quantities.

The decision device 3 makes the decision about the life of the fastening unit 24 in accordance with the plurality of actually measured feature quantities (actually measured correlation) extracted and the criterion information stored in the storage device 35. In other words, the decision device 3 according to this embodiment makes the decision about the life of the fastening unit 24 based on the criterion correlation between the plurality of criterion feature quantities and the actually measured correlation between the plurality of actually measured feature quantities.

The tool system 1 according to this embodiment makes the decision about the life of the fastening unit 24 based on the correlation between a plurality of feature quantities of multiple different types. This achieves the advantage of contributing to improving the accuracy of the decision made about the life, compared to a situation where the decision is made based on only one type of feature quantity.

In this embodiment, the "life" as used herein is related to a degree of wear to be caused to a particular part Z1 (refer to FIG. 1B) of the fastening unit 24 as a result of the fastening operations performed by the fastening unit 24. As the fastening unit 24 deteriorates increasingly due to the wear of the particular part Z1, the fastening torque decreases more and more significantly to cause a serious shortage of torque, which may prevent the fastening member X1 from being fastened sufficiently in some cases. In such a situation, it is recommended that a member, covering the particular part Z1, of the fastening unit 24 be replaced with a new member (i.e., it is about time to replace the member). As used herein, the "decision about the life" may be a decision about whether the life has come to an end or whether the life has come close to an end (i.e., whether there is any sign that the life has almost ended), whichever is appropriate. Note that the cause that puts an end to the life is not necessarily the wear of the fastening unit 24 but may also be, for example, a deep dent or chipping of the fastening unit 24.

In the following description, if the life of the fastening unit 24 has come to an end or if the fastening unit 24 is showing any sign that its life is close to an end, such a situation will be hereinafter referred to by the expression "it is about time to replace the fastening unit 24."

The decision system 100 according to this embodiment includes an acquirer 32, the storage device 35, and the decider 34. The acquirer 32 acquires a physical quantity while the tool 2, including the fastening unit 24 that fastens the fastening member X1 by driving the tip tool (socket 242) in rotation with the motive power supplied from the motor 243, is fastening the fastening member X1. In this embodiment, all the functions of the decision system 100 are supposed to be provided for the decision device 3 as an example. However, this is only an example and should not be construed as limiting. Alternatively, at least some functions of the decision system 100 may be provided for a device different from the decision device 3 (communications device). For example, the plurality of functions of the decision system 100 may be distributed in a plurality of devices. The plurality of devices may include an external server installed outside the workplace or outside the factory. The "external server" may include a single server device or a plurality of server devices. The plurality of server devices may form a cloud computing system.

A decision method according to this embodiment is to be applied to the tool 2 including the fastening unit 24 that fastens the fastening member X1 by driving the tip tool (socket 242) in rotation with the motive power supplied from the motor 243. The decision method includes acquisition processing (acquisition step) and decision processing (decision step). The acquisition processing (acquisition step) includes acquiring a physical quantity while the tool 2 is fastening the fastening member X1. The decision processing (decision step) includes making a decision about the life of the fastening unit 24 in accordance with not only criterion information but also an actually measured correlation. The criterion information has been set based on a criterion correlation between a plurality of criterion feature quantities. The plurality of criterion feature quantities are a plurality of feature quantities of multiple different types and are used as criteria for making the decision about the life of the fastening unit 24. The actually measured correlation is a correlation between a plurality of actually measured feature quantities. The plurality of actually measured feature quantities are a plurality of feature quantities respectively corresponding to the multiple different types of the plurality of criterion feature quantities and are based on the physical quantity acquired in the acquisition processing (acquisition step).

This decision method is used on a computer system (decision system 100). That is to say, this decision method may also be implemented as a program. A program according to an aspect is designed to cause one or more processors to perform the decision method described above. The program may be stored on a computer-readable non-transitory storage medium.

(2) Detailed configuration

Next, a detailed configuration for the tool system 1 according to this embodiment will be described with reference to FIGS. 1A-4B.

(2.1) Configuration for tool system

As shown in FIG. 1A, the tool system 1 according to this embodiment includes either a single tool 2 or a plurality of tools 2 (which are supposed to be two tools 2a, 2b in the following description of this embodiment for the sake of convenience) and the decision device 3. These two tools 2a, 2b have the same configuration. In the following description, if there is no need to distinguish these two tools 2a, 2b from each other, the two tools 2a, 2b will be hereinafter collectively referred to as "tools 2."

The tool system 1 according to this embodiment may be used, for example, on an assembly line on which a plurality of users perform assembling operations on a plurality of workpieces. In particular, in this embodiment, the tool 2a is supposed to be used by a first user and the tool 2b is supposed to be used by a second user, different from the first user, as an example. The first user and the second user perform assembling operations on two different workpieces. In this example, the workpieces on which the first and second users perform the assembling operations are the same type of workpieces, into which the fastening members X1 are to be fastened at the same position. All of the fastening members X1 to be fastened by the first and second users by using the tools 2 are supposed to be or have the same type, the same size, the same material, and the same rated torque. Optionally, a single user may use a plurality of tools 2 (tool 2a, tool 2b).

The decision device 3 according to this embodiment is a communications device configured to be ready to communicate with the two tools 2a, 2b. The decision device 3 receives various pieces of information (to be described later) from the respective tools 2 and manages these tools 2.

(2.2) Configuration for tool

First, a configuration for each tool 2 will be described with reference to FIGS. 1A-3. As shown in FIG. 1A, the tool 2a includes the fastening unit 24, a communications interface 25, a controller 26, the sensor unit 27, a battery (battery pack 201), an indicator 211, and an operating panel 231. Although a configuration for the tool 2b is not shown in FIG. 1A, the tool 2b, as well as the tool 2a, includes the fastening unit 24, the communications interface 25, the controller 26, the sensor unit 27, the battery (battery pack 201), the indicator 211, and the operating panel 231. That is to say, the tool system 1 according to this embodiment includes a plurality of fastening units 24 and a plurality of sensor units 27 corresponding one to one to the plurality of fastening units 24. In this embodiment, the battery pack 201 is supposed to be counted among the constituent elements of the tool 2. However, the battery pack 201 does not have to be one of the constituent elements of the tool 2. In other words, the battery pack 201 may be counted out of the constituent elements of the tool 2. For example, the battery pack 201 may be provided separately from the tool 2 (tool body) and attached removably to the tool 2 (tool body).

As shown in FIGS. 2A and 2B, each tool 2 further includes a body 20. The body 20 of the tool 2 includes a barrel 21, a grip 22, and an attachment 23.

The barrel 21 is formed in a cylindrical shape (e.g., circular cylindrical shape in this embodiment). The grip 22 protrudes in one direction (e.g., downward in FIG. 2A) from a part of the circumferential surface of the barrel 21. The attachment 23 is designed to have the battery pack 201 removably attached thereto. In other words, the barrel 21 and the attachment 23 are coupled together via the grip 22.

At least part of the fastening unit 24 (refer to FIG. 1A) is housed in the barrel 21. An output shaft 241 (to be described later) of the fastening unit 24 protrudes from one axial end surface of the barrel 21.

The grip 22 is a part to be gripped by the user while he or she is performing the operations. The grip 22 is provided with a trigger switch 221. The trigger switch 221 is a switch for controlling the ON/OFF states of the operation of the fastening unit 24. The trigger switch 221 has an initial position and an ON position. Having the trigger switch 221 pushed or pulled to the ON position by the user activates the fastening unit 24. In addition, the trigger switch 221 allows the user to adjust the number of revolutions of the fastening unit 24 according to how deep the trigger switch 221 is pulled (i.e., according to its manipulative variable).

The attachment 23 is formed in the shape of a compressed rectangular parallelepiped. The battery pack 201 is attached removably to one side, opposite from the grip 22, of the attachment 23.

The battery pack 201 may be implemented as, for example, a lithium-ion battery. The battery pack 201 supplies electric power to the fastening unit 24, the communications interface 25, the controller 26, and other components.

The attachment 23 is also provided with the operating panel 231. The operating panel 231 allows the user to enter various types of settings for, and confirm the state of, the tool 2. That is to say, by operating the operating panel 231, the user is allowed to change the operation mode of the tool 2 or check the remaining capacity of the battery pack 201, for example.

The indicator 211 may be implemented as, for example, a light-emitting diode (LED). The indicator 211 is provided for the other end (i.e., the rear end), opposite from the output shaft 241, of the barrel 21 of the body 20 to allow the user to visually check the indicator 211 easily during his or her operations (refer to FIG. 2B).

In addition, the tool 2 according to this embodiment has, as its operation modes, at least a fastening mode and a learning mode. As used herein, the fastening mode refers to an operation mode in which the user performs the fastening operation on the fastening member X1 using the tool 2. The fastening mode is a mode applied to a so-called "normal operation." As used herein, the learning mode refers to an operation mode in which criterion information is set and is a mode which is preferably entered either before the tool 2 is used for the first time or before the normal operation is performed. The operation mode may be changed in accordance with an operating command entered by the user through either the operating panel 231 or, for example, the trigger switch 221 or a dip switch, provided separately from the operating panel 231, whichever is appropriate.

The fastening unit 24 (refer to FIG. 1A) according to this embodiment includes the output shaft 241, a speed reducer mechanism, a drive shaft, the impact mechanism 244, the socket 242, and the motor 243 (refer to FIG. 1A). The fastening unit 24 is configured to be activated with the electric power supplied from the battery pack 201 to the motor. The fastening unit 24 fastens the fastening member X1 by driving a tip tool (e.g., the socket 242) in rotation with motive power supplied from the motor 243.

The speed reducer mechanism transmits the rotational force of the rotary shaft of the motor 243 to a drive shaft. The speed reducer mechanism may be, for example, a planetary gear mechanism and transforms the rotational velocity and torque of the rotary shaft of the motor 243 into a rotational velocity and torque required for turning a screw. The rotational force of the drive shaft is output to the output shaft 241, which transmits the rotational force to the socket 242. The output shaft 241 rotates around a rotational axis Ax1 aligned with the direction in which the output shaft 241 protrudes. That is to say, the fastening unit 24 drives the output shaft 241 in rotation around the rotational axis Ax1. In other words, activating the fastening unit 24 causes torque to be applied to the output shaft 241, thereby turning the output shaft 241.

A cylindrical socket 242 for rotating the fastening member X1 (such as a bolt or a nut) is attached removably onto the output shaft 241. The socket 242 turns along with, and around, the output shaft 241. The size of the socket 242 attached to the output shaft 241 may be selected as appropriate by the user according to the size of the fastening member X1. According to such a configuration, activating the fastening unit 24 causes the output shaft 241 to turn, thus causing the socket 242 to rotate along with the output shaft 241. If the socket 242 is fitted onto the fastening member X1 at this time, then the fastening member X1 turns along with the socket 242, thus having the operation of tightening the fastening member X1 done. In this manner, the tool 2 may have the operation of tightening the fastening member X1 done by activating the fastening unit 24.

Optionally, a socket anvil may also be attached, instead of the socket 242, onto the output shaft 241. The socket anvil is also attached removably to the output shaft 241. This allows a bit (such as a screwdriver bit or a drill bit) to be attached to the output shaft 241 via the socket anvil.

The impact mechanism 244 is driven with the motive power supplied from the motor 243. As shown in FIG. 1B, the impact mechanism 244 includes, for example: a hammer 244A, which is supported rotatably by the drive shaft; and an anvil 244B (impact receiving member), which is provided at the rear end of the output shaft 241. The hammer 244A applies impacting force to the anvil 244B as the drive shaft turns.

The impact mechanism 244 is configured to, when (the work value of) fastening torque exceeds a predetermined level, apply impacting force in the rotational direction to the output shaft 241. This allows the tool 2 to apply greater fastening torque to the fastening member X1. In this embodiment, the socket 242 and the impact mechanism 244 do not have to be constituent elements of the fastening unit 24. In other words, the socket 242 and the impact mechanism 244 may be counted out of the constituent elements of the fastening unit 24.

If the user has the fastening operations done repeatedly by using the tool 2, then a particular part Z1 (refer to FIG. 1B) of the fastening unit 24 may be worn down so much as to cause a significant decline in fastening torque. In this embodiment, the particular part Z1 is supposed to be, for example, a part where the hammer 244A and the anvil 244B are in contact with each other. That is to say, while the hammer 244A performs impact operations repeatedly on the anvil 244B, the surface of the hammer 244A slides on the contact surface of the anvil 244B and applies impacting force to the contact surface of the anvil 244B. Thus, at least one of the hammer 244A or the anvil 244B may be worn little by little as the number of times of use increases. As a result, the wear of the particular part Z1 may be one factor that would accelerate the timing to replace the fastening unit 24. Nevertheless, the particular part Z1 does not have to be the part where the hammer 244A and the anvil 244B are in contact with each other. The factor that would accelerate the timing to replace the fastening unit 24 is not necessarily wear. For example, the particular part Z1 may also be the output shaft 241 and the factor that would accelerate the timing to replace the fastening unit 24 may also be deformation that may be caused to the output shaft 241, for example.

The communications interface 25 is a communications interface configured to be ready to communicate with a communications interface 31 (to be described later) of the decision device 3. The communications interface 25 according to this embodiment communicates with the communications interface 31 of the decision device 3 by a wireless communications protocol compliant with a standard such as Wi-Fi(R), Bluetooth(R), ZigBee(R), or a low power radio standard requiring no licenses (such as the Specified Low Power Radio standard). Alternatively, the communications interface 25 may also be configured to be ready to communicate with the communications interface 31 of the decision device 3 via wired communication.

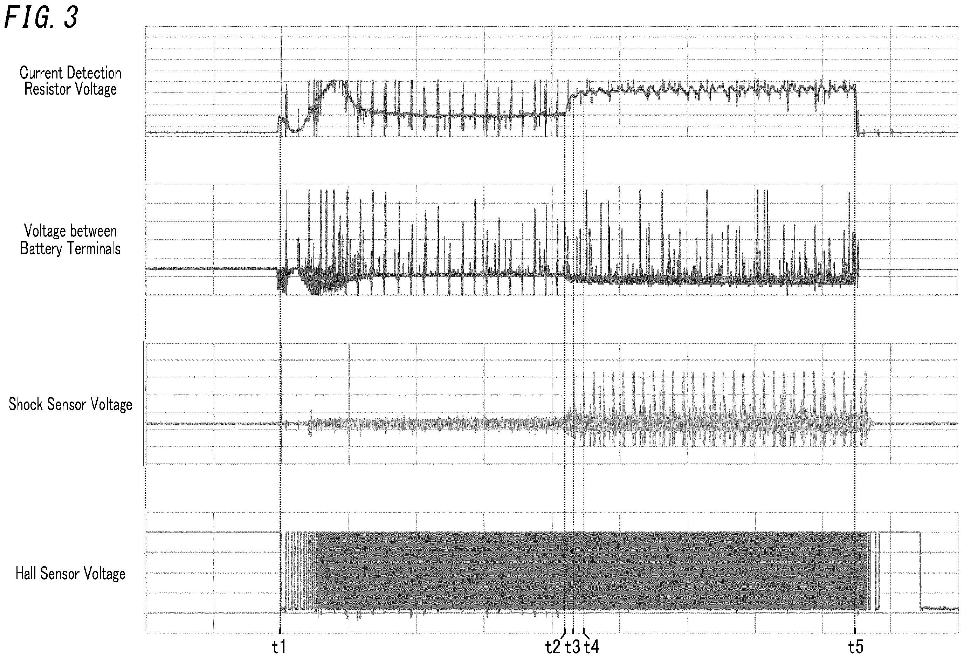

The sensor unit 27 detects a physical quantity while the fastening unit 24 is performing the fastening operation on the fastening member X1. The sensor unit 27 according to this embodiment includes, for example, a voltage detector, a current detector, a shock sensor, and a hall sensor. The voltage detector, the current detector, the shock sensor, and the hall sensor detect, as respective physical quantities, the voltage waveform of a current detection resistor voltage, the voltage waveform of voltage between battery terminals, the voltage waveform of a shock sensor voltage, and the voltage waveform of a hall sensor voltage (refer to FIG. 3). In the following description, the voltage between the battery terminals will be hereinafter simply referred to as "battery voltage."

As used herein, the "current detection resistor voltage" refers to the voltage applied to a detection resistor (i.e., a current detector), which is provided to detect a current (i.e., a motor current) flowing through the coil of the motor 243. The value of the motor current is determined by the value of the current detection resistor voltage and a known resistance value of the detection resistor. That is to say, the waveform of the motor current may be derived from the voltage waveform of the current detection resistor voltage.

As used herein, the "voltage between the battery terminals" refers to the voltage between the output terminals of the battery pack 201 and is detected by the voltage detector. The voltage between the battery terminals may be regarded as a voltage applied to the motor 243 (i.e., may be regarded as a motor voltage). Thus, the waveform of the voltage between the battery terminals may also be handled as the waveform of the motor voltage.

As used herein, the "shock sensor voltage" refers to the output voltage of the shock sensor which detects acceleration (either impact or vibration) and outputs a voltage signal representing the acceleration thus detected.

As used herein, the "hall sensor voltage" refers to the output voltage of the hall sensor which outputs a voltage signal according to the rotational position of the rotor of the motor 243.

The controller 26 may include, as a principal constituent element, a microcontroller including one or more processors and one or more memories, for example. The microcontroller performs the function of the controller 26 by making the one or more processors execute a program stored in the one or more memories. The program may be stored in advance in the memory. Alternatively, the program may also be distributed after having been stored in a non-transitory storage medium such as a memory card or downloaded via a telecommunications line. In other words, the program is designed to make the one or more processors function as the controller 26.

The controller 26 performs the fastening control, communication control, and notification control functions and other functions. The controller 26 controls the fastening unit 24. Specifically, the controller 26 controls the motor 243 of the fastening unit 24 to cause the output shaft 241 (refer to FIG. 2) to turn at a rotational velocity determined by the press depth of the trigger switch 221 (refer to FIG. 2).

In addition, the controller 26 also controls the motor 243 of the fastening unit 24 such that the fastening torque becomes equal to a torque setting. The controller 26 has a torque estimating function of estimating the magnitude of the fastening torque. In this embodiment, the controller 26 estimates, until the estimated value of the fastening torque reaches a seating determination level, the magnitude of the fastening torque based on, for example, the cycle of the impacting force applied by the impact mechanism 244. When the estimated value of the fastening torque reaches the seating determination level, the controller 26 estimates the magnitude of the fastening torque based on the number of impacts applied by the impact mechanism 244. When finding the number of impacts applied by the impact mechanism 244 has reached a threshold number of times based on the torque setting, the controller 26 determines that the fastening torque have reached a torque setting, and stops running the fastening unit 24 (i.e., the motor 243). This allows the fastening unit 24 to fasten the fastening member X1 with fastening torque that exactly matches the torque setting unless there is any inconvenience (e.g., the fastening torque has reached the seating determination level erroneously even though the fastening member X1 actually has not been seated yet).

In addition, the controller 26 also acquires information about the physical quantity that has been detected by the sensor unit 27 while the fastening unit 24 is performing the fastening operation on the fastening member X1. After having acquired the information about the physical quantity that has been detected by the sensor unit 27, the controller 26 operates differently according to the operation mode of the tool 2.

Specifically, if the operation mode of the tool 2 is a fastening mode, then the controller 26 defines correspondence to indicate that the physical quantity has been detected in the fastening mode and makes the communications interface 25 transmit information about the physical quantity to the decision device 3. In the following description, the physical quantity detected in the fastening mode will be hereinafter referred to as a "physical quantity for decision."

On the other hand, if the operation mode of the tool 2 is a learning mode, then the controller 26 according to this embodiment makes the user enter an answer to the question of whether the fastening member X1 has been fastened properly in a situation where the life of the fastening unit 24 has not come to an end yet or there is no sign indicating that the life of the fastening unit 24 is close to an end, either (e.g., at a stage of initial use of the tool 2). That is to say, if the operation mode of the tool 2 is the learning mode, the user who has fastened the fastening member X1 using the tool 2 determines whether the fastening member X1 has been fastened properly since it is not yet time to replace the fastening unit 24. For example, the user confirms, by any of various methods such as loosening torque method, marking method, or tightening torque method, if the fastening member X1 has been fastened sufficiently by smooth operation based on a predetermined magnitude of fastening torque to cause the torque to reach a desired torque value. Based on the result of this confirmation, the user determines that the fastening unit 24 be operating properly (i.e., it is not yet time to replace the fastening unit 24). Then, the user may, for example, operate the operating panel 231 to enter his or her answer to the question of whether the fastening member X1 has been fastened properly. If a decision has been made, based on the user's answer entered, that the fastening unit 24 be operating properly (i.e., it is not yet time to replace the fastening unit 24), then the controller 26 defines the correspondence between the situation and the physical quantity to indicate that the physical quantity has been detected in the learning mode and that the fastening unit 24 is operating properly. Then, the controller 26 makes the communications interface 25 transmit information about the physical quantity to the decision device 3.

On the other hand, if a decision has been made, based on the user's answer entered, that it be about time to replace the fastening unit 24 (i.e., if the wear of the particular part Z1 has caused a significant decline in the fastening torque to prevent the fastening member X1 from being fastened sufficiently), then the controller 26 is supposed to transmit no information about the physical quantity to the decision device 3. Alternatively, even if the decision has been made that it be about time to replace the fastening unit 24, the controller 26 may also define the correspondence between the situation and the physical quantity to indicate that the physical quantity has been detected in the learning mode and that it is about time to replace the fastening unit 24. Then, information about the physical quantity may be transmitted to the decision device 3. To make the machine learn that it is about time to replace the fastening unit 24, the learning mode may be carried out using a tool 2 that has been used to a certain degree. Also, the learning mode may be carried out by either the manufacturer of the decision device 3 or the manufacturer of the tool 2, not by the user of the tool 2. In that case, information about the physical quantity collected in the learning mode that has been carried out by the manufacturer may be transmitted from the manufacturer's server to the decision device 3 via an external network such as the Internet. In the following description, the physical quantity detected in the learning mode will be hereinafter sometimes referred to as a "physical quantity for learning."

Unlike the fastening mode that is a normal operation mode, the confirmation of the fastening state and operation of the operating panel 231 in the learning mode are preferably performed by a person with some skill. In addition, the confirmation and the operation are preferably performed a number of times in advance before the worker is made to perform normal operations.

In addition, each of the plurality of tools 2, including the tools 2a, 2b, stores the identification information of its own device in, for example, the memory of the controller 26. The controller 26 transmits the identification information of its own device to the decision device 3 in association with the information about the physical quantity. This allows the decision device 3 to determine, by the identification information, from which tool 2 the decision device 3 has received the information about the physical quantity.

Furthermore, the controller 26 also controls the indicator 211. As described above, if the fastening unit 24 performs the fastening operation when the operation mode of the tool 2 is the fastening mode, the controller 26 makes the communications interface 25 transmit the physical quantity for decision to the decision device 3. On receiving the physical quantity for decision, the decision device 3 automatically makes the decision about the life of the fastening unit 24 (i.e., determine whether it is about time to replace the fastening unit 24) as described above. Then, the controller 26 lights the indicator 211 differently depending on the decision made by the decision device 3. For example, if the decision indicates that it is about time to replace the fastening unit 24, then the controller 26 makes the indicator 211 flash in red. On the other hand, if the decision indicates that it is not yet time to replace the fastening unit 24 (i.e., that the fastening unit 24 is operating properly), then the controller 26 makes the indicator 211 be continuously lit in green. This allows the user to confirm, by visually checking the lighting state of the indicator 211, whether it is about time to replace the fastening unit 24.

(2.3) Configuration for decision device

Next, a configuration for the decision device 3 will be described with reference to FIGS. 1A-4B. The decision device 3 is a communications device to communicate with the respective tools 2 and may be a mobile communications device such as a personal computer, a smartphone, or a tablet computer. As shown in FIG. 1A, the decision device 3 includes a controller 30, the communications interface 31, and the storage device 35.

The communications interface 31 is a communications interface configured to be ready to communicate with the communications interface 25 of each tool 2. The communications interface 31 according to this embodiment communicates with the communications interface 25 of the tool 2 by a wireless communications protocol compliant with a standard such as Wi-Fi(R), Bluetooth(R), ZigBee(R), or a low power radio standard requiring no licenses (such as the Specified Low Power Radio standard). Alternatively, the communications interface 31 may also be configured to be ready to communicate with the communications interface 25 of the tool 2 via wired communication.

The controller 30 may include, as a principal constituent element, a microcontroller including one or more processors and one or more memories, for example. The microcontroller performs the function of the controller 30 by making the one or more processors execute a program stored in the one or more memories. The program may be stored in advance in the memory. Alternatively, the program may also be distributed after having been stored in a non-transitory storage medium such as a memory card or downloaded via a telecommunications line. In other words, the program is designed to make the one or more processors function as the controller 30. Note that the controller 30 according to this embodiment has higher processing performance than the controller 26 of the tool 2.

As shown in FIG. 1A, the controller 30 includes the acquirer 32, a setter 33, and the decider 34. That is to say, the controller 30 performs the function as the acquirer 32, the function as the setter 33, and the function as the decider 34.

The acquirer 32 acquires, from the tool 2 and via the communications interface 31, the physical quantity while the fastening unit 24 is fastening the fastening member X1 (i.e., performs acquisition processing). The physical quantity acquired by the acquirer 32 is either the physical quantity for learning or the physical quantity for decision. The acquirer 32 according to this embodiment acquires, as respective physical quantities, the voltage waveform of the current detection resistor voltage, the voltage waveform of the voltage between the battery terminals, the voltage waveform of the shock sensor voltage, and the voltage waveform of the hall sensor voltage. The acquirer 32 outputs the physical quantities for learning thus acquired to the setter 33 and outputs the physical quantities for decision thus acquired to the decider 34.

The setter 33 extracts a criterion correlation from the physical quantity (i.e., the physical quantity for learning) that has been detected by the sensor unit 27 of the tool 2 during the fastening operation in which the fastening unit 24 of the tool 2 has fastened the fastening member X1 properly (i.e., without causing a decline in the fastening torque due to wear). Then, the setter 33 sets criterion information based on the criterion correlation thus extracted and makes the storage device 35 store the criterion information. In other words, the setter 33 sets the criterion information based on the physical quantity for learning.

Specifically, on receiving the physical quantity for learning from the acquirer 32, the setter 33 extracts (acquires), from the physical quantity for learning, a criterion correlation between a plurality of criterion feature quantities which are a plurality of feature quantities of multiple different types and used as criteria for making a decision about the life of the fastening unit 24. As used herein, the "plurality of feature quantities of multiple different types" includes a first feature quantity, a second feature quantity, a third feature quantity, a fourth feature quantity, a fifth feature quantity, and a sixth feature quantity. The plurality of criterion feature quantities includes the first through sixth feature quantities extracted from the physical quantity for learning. That is to say, in this embodiment, the number of the types of the plurality of feature quantities is six as an example. However, the number of the types of the feature quantities has only to be two or more and does not have to be six.

The first feature quantity according to this embodiment is an average value of the battery voltage while the impact mechanism 244 is performing the impact operation. In the example shown in FIG. 3, the impact operation is performed by the impact mechanism 244 from a time t2 through a time t5. That is to say, in the example shown in FIG. 3, the first feature quantity is the average value of the battery voltage over the period from the time t2 through the time t5. In this case, the time t2 is a time when the (work value of the) fastening torque exceeds a predetermined level and the impact mechanism 244 starts performing the impact operation. The time t5 is a time when the controller 26 determines that the fastening torque have reached the torque setting to make the motor 243 stop running.

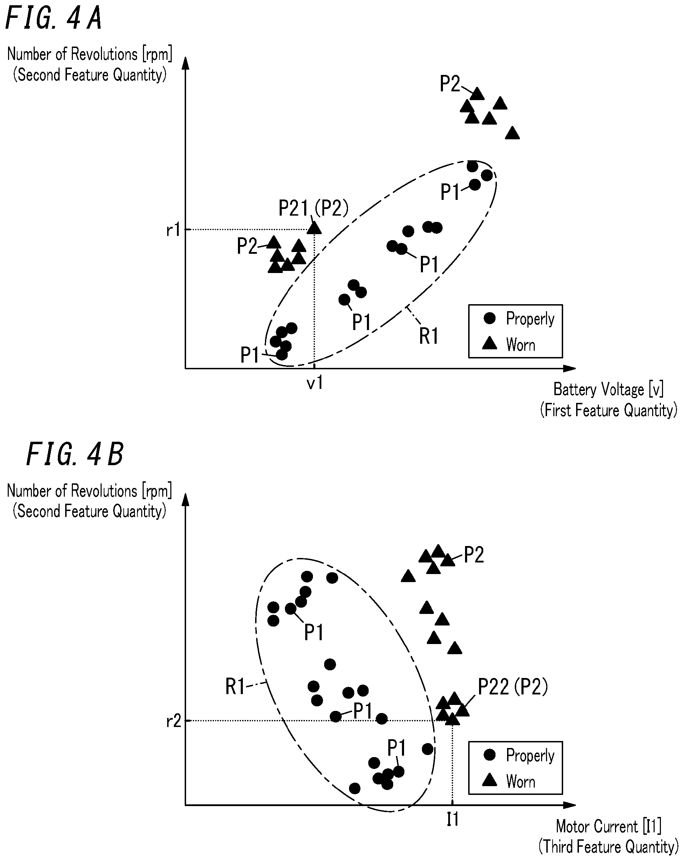

The second feature quantity according to this embodiment is the number of impacts applied for revolution which is the inverse number of an impact cycle. In FIGS. 4A and 4B, the number of impacts applied for revolution is labeled as "number of revolutions" for convenience sake. In the period from the time t2 through the time t5 in which the impact operation is performed by the impact mechanism 244, the shock sensor outputs a plurality of spike voltages, each of which is greater than a predetermined voltage value, as the impact operation is performed. In the example shown in FIG. 3, the shock sensor outputs the spike voltages at a time t3, a time t4, and other times. The interval (i.e., cycle) between the plurality of spike voltages is the interval (i.e., the cycle) between the impact operations. The number of impacts applied for revolution may be obtained based on the cycle of the plurality of spike voltages.

The third feature quantity according to this embodiment is an average value of the motor current while the impact mechanism 244 is performing the impact operation. In the example shown in FIG. 3, the third feature quantity is extracted based on the average value of the current that is calculated based on the current detection resistor voltage in the period from the time t2 through the time t5.

The fourth feature quantity according to this embodiment is an average value of the battery voltage while the motor 243 stops running. For instance, in the example shown in FIG. 3, the fourth feature quantity is the average value of the battery voltage before a time 11. The time t1 is a time when the user turns the trigger switch 221 ON to make the fastening unit 24 start performing the fastening operation (i.e., a time when the motor 243 starts running).

The fifth feature quantity according to this embodiment is a period from a time when the motor 243 starts running to a time when the impact mechanism 244 starts performing the impact operation while the fastening unit 24 is performing the fastening operation. In the example shown in FIG. 3, the fifth feature quantity is the period from the time t1 through the time t2.

The sixth feature quantity according to this embodiment is the period for which the impact mechanism 244 is performing the impact operation. In the example shown in FIG. 3, the sixth feature quantity is the period from the time t2 through the time t5.

The setter 33 extracts, from the physical quantity for learning, the first to sixth feature quantities (as a plurality of criterion feature quantities) such as the ones shown in the following Table 1:

[Table 1]

|  | 1st fastening operation | 2nd fastening operation | ... | nth fastening operation |
|---|---|---|---|---|
| 1st feature quantity | A1 | A2 | ... | An |
| 2nd feature quantity | B1 | B2 | ... | Bn |
| 3rd feature quantity | C1 | C2 | ... | Cn |
| 4th feature quantity | D1 | D2 | ... | Dn |
| 5th feature quantity | E1 | E2 | ... | En |
| 6th feature quantity | F1 | F2 | ... | Fn |

In this embodiment, the plurality of criterion feature quantities (criterion correlation) during the first fastening operation through the plurality of criterion feature quantities (criterion correlation) during the nth fastening operation are stored in the storage device 35 to be associated with each other by the unit of each fastening operation. The criterion correlation may be stored in the storage device 35 in the form of a data table such as the one shown in Table 1. Note that each of the first through nth fastening operations may be performed by any of the tools 2a, 2b. For example, in a situation where after the fastening operations have been performed twice by the tool 2a set in the learning mode, the fastening operation is performed once by the tool 2b set in the learning mode, the fastening operations performed twice by the tool 2a will be hereinafter referred to as a "first fastening operation" and a "second fastening operation," respectively, and the fastening operation performed by the tool 2b will be hereinafter referred to as a "third fastening operation." Optionally, the criterion correlation may be stored in association with the identification information of the tool 2 that has performed each fastening operation. Note that in the example shown in Table 1, the setter 33 extracts, from the physical quantity during the first fastening operation, the criterion correlation indicating that the first feature quantity A1 is correlated with the second feature quantity B1 and that the first feature quantity A1 is correlated with the third feature quantity C1.

In the example shown in Table 1, multiple groups of criterion feature quantities (i.e., a plurality of criterion correlations) including n sets of criterion feature quantities (i.e., n criterion correlations) are stored in the storage device 35, where n is a natural number equal to or greater than one. That is to say, multiple groups of criterion feature quantities (i.e., a plurality of criterion correlations) including one or more sets of criterion feature quantities (i.e., one or more criterion correlations) are stored in the storage device 35.

After having stored, in the storage device 35, the plurality of criterion feature quantities (criterion correlation) thus extracted, the setter 33 according to this embodiment calculates a variance-covariance matrix. The variance-covariance matrix according to this embodiment is an exemplary square matrix including a variance and a covariance which are associated with each of the first through sixth feature quantities (a plurality of feature quantities) included in the multiple groups of criterion feature quantities stored in the storage device 35. The following Table 2 is an exemplary variance-covariance matrix calculated by the setter 33:

[Table 2]

|  | 1st feature quantity | ... | 6th feature quantity |
|---|---|---|---|
| 1st feature quantity | xxx | ... | yyy |
| . | ... | ... | ... |
| . | ... | ... | ... |
| . | ... | ... | ... |
| 6th feature quantity | yyy | ... | zzz |

As shown in Table 2, in the variance-covariance matrix, an element at the $n^{th}$ row and the $n^{th}$ column is a variance value of the $n^{th}$ feature quantity, and an element at the $n^{th}$ row and the $m^{th}$ column and an element at the $m^{th}$ row and the $n^{th}$ column are the covariance value of the $n^{th}$ and $m^{th}$ feature quantities, where n and m are numbers equal to or greater than 1 and equal to or less than 6 and are mutually different numbers. For example, in Table 2, the element at the first row and the sixth column and the element at the sixth row and the first column have the same value.

Then, the setter 33 calculates an inverse matrix of the variance-covariance matrix thus calculated and sets a decision range R1 (refer to FIG. 4A or 4B) in which the Mahalanobis' distance represented by d in Equation (1) is equal to or less than a threshold value. In this case, the threshold value may be, for example, a value that has been set in advance by the user. The user may register or change the threshold value that has been set by, for example, operating the operating panel 231. Note that the threshold value is preferably set in a range where all of the plurality of criterion correlations stored in the storage device 35 fall within the decision range R1. In other words, the threshold value is preferably equal to or greater than the maximum Mahalanobis' distance among a plurality of Mahalanobis' distances with respect to the plurality of criterion correlations stored in the storage device 35.

$$d = \sqrt{(\boldsymbol{x} - \boldsymbol{\mu})^T \Sigma^{-1} (\boldsymbol{x} - \boldsymbol{\mu})}$$

(1)

In Equation (1), x is data to be subjected to the decision, i.e., a plurality of actually measured feature quantities (actually measured correlation) extracted from the physical quantity for decision. In Equation (1), $\Sigma^{-1}$ is the inverse matrix of the variance-covariance matrix. Also, in Equation (1), $\mu$ is the average value of the multiple groups of criterion feature quantities (the plurality of criterion correlations) stored in the storage device 35. That is to say, the setter 33 sets the decision range R1 based on the average value of the multiple groups of criterion feature quantities (the plurality of criterion correlations) stored in the storage device 35, the threshold value that has been set in advance by the user, and the inverse matrix of the variance-covariance matrix.

Then, every time the physical quantity for learning is acquired, the setter 33 either sets or updates the criterion information and makes the storage device 35 store the criterion information that has been set or updated. The criterion information includes the decision range R1 that has been set based on the plurality of criterion correlations. In this embodiment, the criterion information may include, for example, information about the multiple groups of criterion feature quantities (the plurality of criterion correlations) extracted by the setter 33, information about the inverse matrix of the variance-covariance matrix calculated by the setter 33, and information about the decision range R1.

The storage device 35 may be, for example, an electrically erasable programmable read-only memory (EEPROM). The storage device 35 may be the memory of the controller 30. The storage device 35 according to this embodiment stores the above-described criterion information. The criterion information has been set based on a criterion correlation between a plurality of criterion feature quantities, which are a plurality of feature quantities of multiple different types and used as criteria for making a decision about the life of the fastening unit 24 (i.e., to make a decision whether it is about time to replace the fastening unit 24).

The decider 34 makes a decision about the life of the fastening unit 24 (i.e., performs decision processing) in accordance with the criterion information stored in the storage device 35 and the actually measured correlation between the plurality of actually measured feature quantities extracted from the physical quantity for decision. On receiving the physical quantity for decision from the acquirer 32, the decider 34 extracts (acquires), from the physical quantity for decision, a plurality of actually measured feature quantities, which are a plurality of feature quantities of multiple different types and are to be subjected to the decision about the life. The respective types of the plurality of actually measured feature quantities correspond to the types of the plurality of criterion feature quantities. That is to say, the plurality of actually measured feature quantities includes first to sixth feature quantities extracted from the physical quantity for decision.

On extracting the actually measured correlation from the physical quantity for decision, the decider 34 calculates the Mahalanobis' distance by Equation (1) with reference to the criterion information. Then, the decider 34 determines whether the Mahalanobis' distance is equal to or less than the threshold value, i.e., whether the actually measured correlation falls within the decision range R1.

FIGS. 4A and 4B are schematic representations illustrating, as two-dimensional graphs each having an X-axis (the axis of abscissas) and a Y-axis (the axis of ordinates), the concept of the decision range R1. More specifically, FIG. 4A is a schematic representation illustrating the concept of the decision range R1 as a two-dimensional graph representing a correlation between the first feature quantity (on the axis of abscissas) and the second feature quantity (on the axis of ordinates). On the other hand, FIG. 4B is a schematic representation illustrating the concept of the decision range R1 as a two-dimensional graph representing a correlation between the third feature quantity (on the axis of abscissas) and the second feature quantity (on the axis of ordinates). Note that although the decision range R1 according to this embodiment may actually be set as six dimensions (corresponding to the first through sixth physical quantities, respectively), the decision range R1 is illustrated in FIGS. 4A and 4B with attention paid to only two feature quantities, out of the six feature quantities (namely, the first through sixth feature quantities), for the sake of convenience and to make the concept easily understandable.

In FIGS. 4A and 4B, each of the plurality of solid circle points P1 (plots) represents a criterion correlation between a plurality of criterion feature quantities. The plurality of points P1 have been extracted from physical quantities for learning which have been detected during mutually different fastening operations. That is to say, the plurality of points P1 represents the multiple groups of criterion feature quantities (i.e., the plurality of criterion correlations). Each of the plurality of solid triangular points P2 (plots) represents the actually measured correlation in a state where the fastening unit 24 has deteriorated due to wear of the particular part Z1, for example. The plurality of points P2 have been extracted from physical quantities for decision which have been detected during mutually different fastening operations. The decision range R1 is a range where the Mahalanobis' distance is equal to or less than the threshold value. If the actually measured correlation falls outside of the decision range R1 as indicated by the points P2 (i.e., if the Mahalanobis' distance representing the actually measured correlation is greater than the threshold value), then the decider 34 decides that it be about time to replace the fastening unit 24 because the fastening unit 24 has deteriorated due to wear of the particular part Z1. On the other hand, if the actually measured correlation falls within the decision range R1 (i.e., if the Mahalanobis' distance representing the actually measured correlation is equal to or less than the threshold value), then the decider 34 decides that the fastening unit 24 be operating properly (i.e., it be not yet time to replace the fastening unit 24).

If the fastening unit 24 is operating properly (i.e., if it is not yet time to replace the fastening unit 24) as indicated by the plurality of points P1 in FIG. 4A, there is a positive correlation between the average value of the battery voltage (first feature quantity) and the number of impacts applied for revolution (second feature quantity). This is because the larger the average value of the battery voltage (i.e., the average value of the motor voltage) is, the larger the number of revolutions (rotational velocity) of the motor 243 is. Also, if the fastening unit 24 has deteriorated due to the wear of the particular part Z1, for example, the number of impacts applied for revolution tends to be somewhat greater, as indicated by the plurality of points P2 in FIG. 4A, than in a situation where the fastening unit 24 is operating properly.

A point P21, which is one of the plurality of points P2, indicates that the number of impacts applied for revolution is r1 when the average value of the battery voltage is v1 and falls outside of the decision range R1, which means that the fastening unit 24 has deteriorated due to the wear of the particular part Z1. If the decider 34 determined, based on only one type of feature quantity (e.g., the number of impacts applied for revolution), whether it is about time to replace the fastening unit 24, then a decision might be made erroneously, at the point P21, that the fastening unit 24 be operating properly, even though a decision should actually be made that it be about time to replace the fastening unit 24. To avoid such an unwanted situation, the decider 34 according to this embodiment makes, based on the correlation between a plurality of feature quantities of multiple different types (e.g., the first feature quantity and the second feature quantity in the example shown in FIG. 4A), a decision about the life of the fastening unit 24. This allows the decider 34 to correctly decide, as for the point P21, for example, that it be about time to replace the fastening unit 24. In other words, determining, based on the correlation between the first feature quantity and the second feature quantity, whether it is about time to replace the fastening unit 24 or not allows the decider 34 according to this embodiment to more accurately decide that it be about time to replace the fastening unit 24 that has rather deteriorated due to the wear. That is to say, having the decider 34 make a decision about the life of the fastening unit 24 based on a plurality of feature quantities of multiple different types improves the accuracy of decision, compared to a situation where the decision is made based on only one type of feature quantity.

If the fastening unit 24 is operating properly (i.e., if it is not yet time to replace the fastening unit 24) as indicated by the plurality of points P1 in FIG. 4B, there is a negative correlation between the average value of the motor current (third feature quantity) and the number of impacts applied for revolution (second feature quantity). On the other hand, if the fastening unit 24 has deteriorated due to the wear of the particular part Z1, for example, the average value of the motor current tends to be greater, as indicated by the plurality of points P2 in FIG. 4B, than in a situation where the fastening unit 24 is operating properly.

A point P22, which is one of the plurality of points P2, indicates that the number of impacts applied for revolution is r2 when the motor current is I1 and falls outside of the decision range R1, which means that the fastening unit 24 has deteriorated due to the wear of the particular part Z1. If the decider 34 determined, based on only one type of feature quantity (e.g., the average value of the motor current), whether it is about time to replace the fastening unit 24, then a decision might be made erroneously, at the point P22, that the fastening unit 24 be operating properly, even though a decision should actually be made that it be about time to replace the fastening unit 24. To avoid such an unwanted situation, the decider 34 according to this embodiment makes, based on the correlation between a plurality of feature quantities of multiple different types (e.g., the third feature quantity and the second feature quantity in the example shown in FIG. 4B), a decision about the life of the fastening unit 24. This allows the decider 34 to correctly decide, as for the point P22, for example, that it be about time to replace the fastening unit 24. In other words, determining, based on the correlation between the third feature quantity and the second feature quantity, whether it is about time to replace the fastening unit 24 or not allows the decider 34 according to this embodiment to more accurately decide that it be about time to replace the fastening unit 24 that has rather deteriorated due to the wear. That is to say, having the decider 34 make a decision about the life of the fastening unit 24 based on a plurality of feature quantities of multiple different types improves the accuracy of decision, compared to a situation where the decision is made based on only one type of feature quantity.

After having made the decision about the life of the fastening unit 24, the decider 34 transmits, by reference to the identification information associated with the information about the physical quantity, the result of the decision to a tool 2 identified by the identification information.

(3) Operation

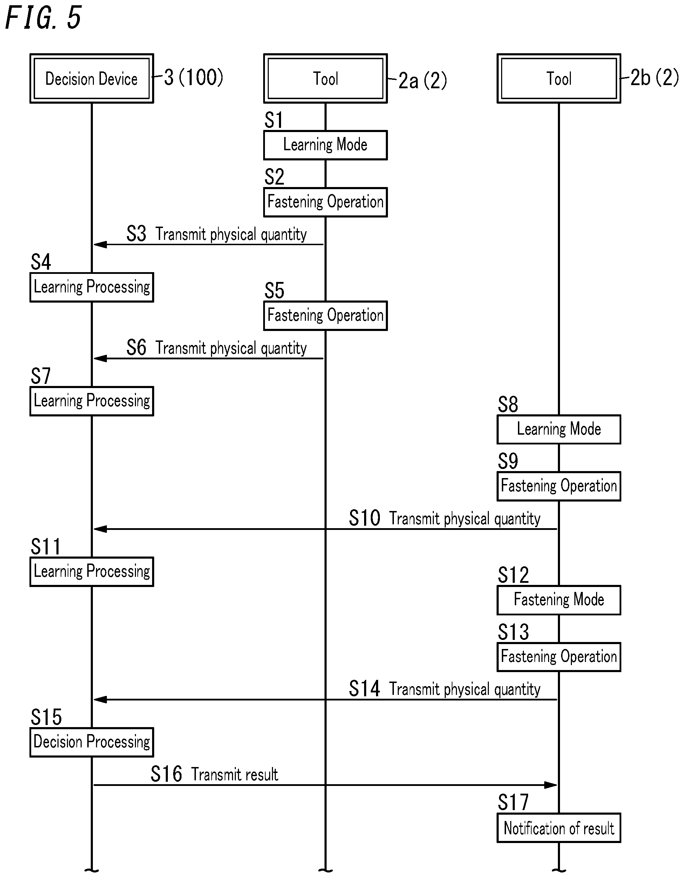

Next, it will be described with reference to FIGS. 5-7 how the tool system 1 according to this embodiment operates.

FIG. 5 is a sequence chart showing an exemplary procedure of operation of the tool system 1 in a state where the criterion information has not been set yet. In the example shown in FIG. 5, the first user is supposed to use the tool 2a in the learning mode and the second user is supposed to use the tool 2b in the learning mode and the fastening mode.

Since the criterion information has not been set yet, first, the criterion information needs to be set by making either the first user or the second user use the tool 2 in the learning mode. In the example shown in FIG. 5, the first user performs a predetermined operation on the operating panel 231 of the tool 2a to have the operation mode of the tool 2a set at the learning mode (in S 1). Then, the first user sets the socket 242 of the tool 2a in place on the fastening member X1 and turns the trigger switch 221 ON, for example, to make the fastening unit 24 perform the fastening operation on the fastening member X1 (i.e., the first fastening operation shown in Table 1) (in S2). Note that the first fastening operation in Step S2 is supposed to be a fastening operation through which the fastening member X1 has been fastened sufficiently and seated smoothly to have the user decide that the fastening unit 24 be operating properly. Next, as the operation mode is the learning mode, the tool 2a transmits information about the physical quantity for learning to the decision device 3 (in S3). Note that the information about the physical quantity for learning to be transmitted by the tool 2a to the decision device 3 is associated with the identification information of the tool 2a.

On receiving the information about the physical quantity for learning, the decision device 3 performs learning processing (in S4). The decision device 3 extracts, by performing the learning processing, a criterion correlation between the plurality of criterion feature quantities from the physical quantity for learning, initializes (or updates) the criterion information, and makes the storage device 35 store the criterion information thus initialized (or updated).

Next, with the operation mode of the tool 2a unchanged from the learning mode, the first user places the socket 242 of the tool 2a on another fastening member X1 and turns the trigger switch 221 ON to make the fastening unit 24 perform the fastening operation on the fastening member X1 (i.e., the second fastening operation shown in Table 1) (in S5). Note that the second fastening operation performed in Step S5 is supposed to be a fastening operation through which the fastening member X1 has been fastened sufficiently and seated smoothly to have the user decide that the fastening unit 24 be operating properly. Next, the tool 2a transmits information about the physical quantity for learning to the decision device 3 (in S6). On receiving the information about the physical quantity for learning, the decision device 3 performs the learning processing (in S7).

By performing these processing steps, the decision device 3 extracts multiple groups of criterion feature quantities (i.e., a plurality of criterion correlations) from a plurality of physical quantities during a plurality of fastening operations in which the tool 2a has fastened a plurality of fastening members X1 sequentially and properly (i.e., without causing a decline in fastening torque due to wear). In addition, the decision device 3 has set criterion information based on the plurality of criterion correlations. In other words, the setter 33 of the decision device 3 extracts the plurality of criterion correlations from a plurality of physical quantities detected by the sensor unit 27 of the tool 2a during the plurality of fastening operations in which the fastening unit 24 of the tool 2a has fastened the plurality of fastening members X1 sequentially and properly. The setter 33 sets the criterion information based on the plurality of criterion correlations thus extracted.

Next, the second user performs a predetermined operation on the operating panel 231 of the tool 2b to have the operation mode of the tool 2b set at the learning mode (in S8). Then, with the operation mode of the tool 2b unchanged from the learning mode, the second user sets the socket 242 of the tool 2b in place on another fastening member X1 and turns the trigger switch 221 ON to make the fastening unit 24 perform the fastening operation on the fastening member X1 (i.e., the third fastening operation shown in Table 1) (in S9). Note that the third fastening operation in Step S9 is supposed to be a fastening operation through which the fastening member X1 has been fastened sufficiently and seated smoothly to have the user decide that the fastening unit 24 be operating properly. Next, the tool 2b transmits information about the physical quantity for learning to the decision device 3 (in S10). Note that the information about the physical quantity for learning to be transmitted by the tool 2b to the decision device 3 is associated with the identification information of the tool 2b. On receiving the information about the physical quantity for learning, the decision device 3 performs learning processing (in S11).

By performing these processing steps, the decision device 3 extracts multiple groups of criterion feature quantities (i.e., a plurality of criterion correlations) from a plurality of physical quantities during a plurality of fastening operations in which the plurality of fastening units 24 of the plurality of tools 2 have fastened the plurality of fastening members X1 sequentially and properly. In addition, the decision device 3 has set criterion information based on the plurality of criterion correlations. In other words, the setter 33 of the decision device 3 extracts the plurality of criterion correlations from a plurality of physical quantities detected by the plurality of sensor units 27 of the plurality of tools 2a, 2b during the plurality of fastening operations in which the plurality of fastening units 24 of the plurality of tools 2a, 2b have fastened the plurality of fastening members X1 sequentially and properly. The setter 33 sets the criterion information based on the plurality of criterion correlations thus extracted.

Next, the second user performs a predetermined operation on the operating panel 231 of the tool 2b to have the operation mode of the tool 2b set at the fastening mode (in S12). Then, the second user sets the socket 242 of the tool 2b in place on another fastening member X1 and turns the trigger switch 221 ON to make the fastening unit 24 perform the fastening operation on the fastening member X1 (in S13). Next, as the operation mode is the fastening mode, the tool 2b transmits information about the physical quantity for decision to the decision device 3 (in S14). Note that the information about the physical quantity for decision to be transmitted by the tool 2b to the decision device 3 is associated with the identification information of the tool 2b.

On receiving the information about the physical quantity for decision, the decision device 3 extracts an actually measured correlation between a plurality of actually measured feature quantities from the physical quantity for decision and determines, based on the actually measured correlation thus extracted and the criterion information, whether it is about time to replace the fastening unit 24 (in S15). Then, the decision device 3 transmits, by reference to the identification information associated with the information about the physical quantity for decision, the result of decision to the tool 2b (in S16). On receiving the result of decision, the tool 2b makes notification in accordance with the result of decision (in S17).

Note that the sequence chart shown in FIG. 5 shows just an exemplary operation of the tool system 1. Thus, the processing steps shown in FIG. 5 may be performed in a different order as appropriate, an additional processing step may be performed as needed, or at least one of the processing steps may be omitted as appropriate. For example, if the criterion information has been set at least once with respect to the decision device 3, then the second user may set the operation mode of the tool 2b at the fastening mode, not the learning mode, to have the fastening operation on the fastening member X1 started.

Optionally, the criterion information may have been set initially in advance while either the tool 2 or the decision device 3 was manufactured and shipped. That is to say, the user who uses the tool 2 does not have to set the criterion information through the tool 2 on the spot where he or she is performing the actual operations, for example. Nevertheless, if the user is made to set the criterion information initially and update (i.e., make re-learning about) the criterion information through the tool 2, then the criterion information will be more suitable to the environment where he or she uses the tool 2.

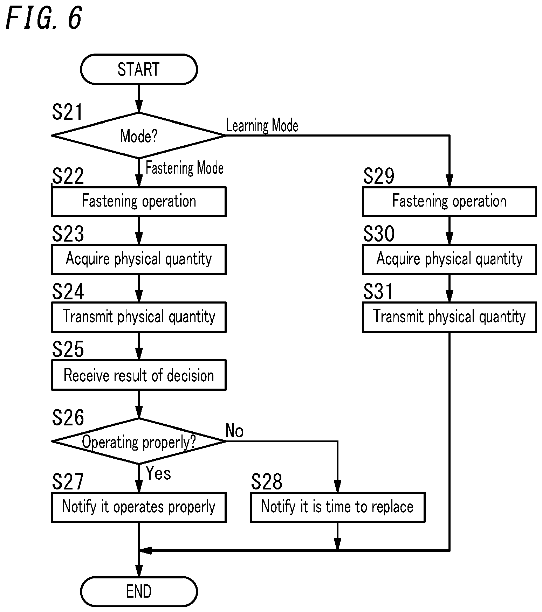

Next, it will be described with reference to FIG. 6 how the tool 2 according to this embodiment operates. First, the tool 2 sees whether the operation mode has been set at the fastening mode or the learning mode (in S21).

First, a situation where the operation mode of the tool 2 is the fastening mode (i.e., a situation where the answer to the query of S21 is the fastening mode) will be described. In that case, the fastening unit 24 performs the fastening operation on the fastening member X1 (in S22). Next, the controller 26 of the tool 2 acquires the physical quantity that has been detected by the sensor unit 27 while the fastening unit 24 is performing the fastening operation (in S23). The controller 26 makes the communications interface 25 transmit information about the physical quantity for decision to the decision device 3 (in S24). When the communications interface 25 receives the result of decision from the decision device 3 (in S25), the controller 26 sees whether the result of decision indicates that the fastening unit 24 is operating properly (in S26). If the result of decision indicates that the fastening unit 24 is operating properly (if the answer is YES in S26), then the controller 26 lights the indicator 211 in green to notify the user that it is not yet time to replace the fastening unit 24 (in S27) and end the process. On the other hand, if the result of decision indicates that it is about time to replace the fastening unit 24 (if the answer is NO in S26), then the controller 26 lights the indicator 211 in red to notify the user that it is about time to replace the fastening unit 24 (in S28) and end the process.

Next, a situation where the operation mode of the tool 2 is the learning mode (i.e., a situation where the answer to the query of S21 is the learning mode) will be described. In that case, the fastening unit 24 performs the fastening operation on the fastening member X1 (in S29). Suppose this fastening operation is a fastening operation in which the user has decided that the fastening unit 24 is operating properly. Next, the controller 26 of the tool 2 acquires the physical quantity that has been detected by the sensor unit 27 while the fastening unit 24 is performing the fastening operation (in S30). The controller 26 makes the communications interface 25 transmit information about the physical quantity for learning to the decision device 3 (in S31). Then, the tool 2 ends the process.

Note that the flowchart shown in FIG. 6 shows just an exemplary operation of the tool 2. Thus, the processing steps shown in FIG. 6 may be performed in a different order as appropriate, an additional processing step may be performed as needed, or at least one of the processing steps may be omitted as appropriate. For example, the processing step S21 of checking the operation mode of the tool 2 may be performed either after the fastening unit 24 has performed the fastening operation (in S22 or S29) or after the controller 26 has acquired the physical quantity (in S23 or S30).

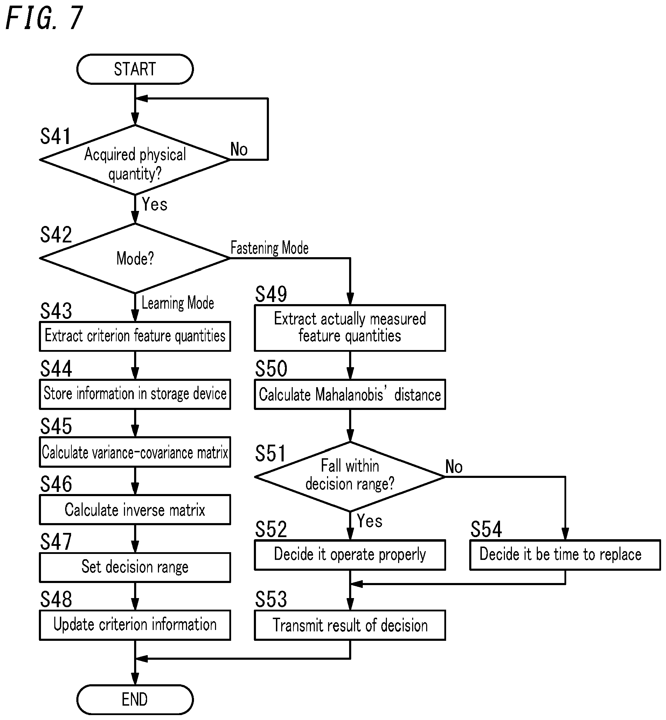

Next, it will be described with reference to FIG. 7 how the decision device 3 according to this embodiment operates. First, the decision device 3 sees if the acquirer 32 has acquired any physical quantity from the tool 2 via the communications interface 31 (in S41). In other words, the decision device 3 performs the acquisition processing (in S41). If the acquirer 32 has acquired no physical quantity (if the answer is NO in S41), then the decision device 3 repeats the processing step S41 until the acquirer 32 acquires any physical quantity. If the acquirer 32 has acquired any physical quantity (if the answer is YES in S41), then the decision device 3 determines (sees) whether the mode associated with the physical quantity is the learning mode or the fastening mode (in S42).

If the mode turns out to be the learning mode (i.e., if the answer to the query of S42 is the learning mode), then the acquirer 32 outputs the physical quantity for learning to the setter 33 and the setter 33 extracts a criterion correlation between the criterion feature quantities from the physical quantity for learning (in S43). Then, the setter 33 stores, in the form of a data table, for example, the plurality of criterion feature quantities as the criterion information in the storage device 35 (in S44). Next, the setter 33 calculates a variance-covariance matrix of the multiple groups of criterion feature quantities (i.e., the plurality of criterion correlations) stored in the storage device 35 (in S45) and further calculates an inverse matrix of the variance-covariance matrix (in S46). Subsequently, the setter 33 sets the decision range R1 based on the average value of the multiple groups of criterion feature quantities (i.e., the plurality of criterion correlations) stored in the storage device 35, a threshold value that has been set in advance by the user, and the inverse matrix of the variance-covariance matrix (in S47). After having set the decision range R1, the setter 33 sets (or updates) the criterion information (in S48) to end the process. Note that this series of processing steps S43-S48 is an example of the learning processing (S4; S7; S11) shown in FIG. 5.

On the other hand, if the mode turns out to be the fastening mode in the processing step S42 (i.e., if the answer to the query of S42 is the fastening mode), then the acquirer 32 outputs the physical quantity for decision to the decider 34 and the decider 34 extracts an actually measured correlation between the plurality of actually measured feature quantities from the physical quantity for decision (in S49). Then, the decider 34 calculates, by reference to the criterion information, a Mahalanobis' distance based on the average value of the multiple groups of criterion feature quantities (i.e., the plurality of criterion correlations) stored in the storage device 35, the inverse matrix of the variance-covariance matrix, and the plurality of actually measured feature quantities (in S50). Then, the decider 34 sees whether the Mahalanobis' distance thus calculated is equal to or less than the threshold value, i.e., whether the actually measured correlation between the plurality of actually measured feature quantities falls within the decision range R1 (in S51). If the actually measured correlation falls within the decision range R1 (if the answer is YES in S51), then the decider 34 decides that the fastening unit 24 be operating properly (i.e., it be not yet time to replace the fastening unit 24) (in S52) and transmits the result of decision to that effect (in S53) to end the process. On the other hand, if the actually measured correlation falls outside of the decision range R1 (if the answer is NO in S51), then the decider 34 decides that it be about time to replace the fastening unit 24 (in S54) and transmits the result of decision to that effect (in S53) to end the process. Note that this series of processing steps S49-S54 is an example of the decision processing (S16) shown in FIG. 5. Also, the series of processing steps S49-S52 and the processing step S53 are an example of the decision processing to be performed by the (decider 34 of the) decision device 3.

Note that the flowchart shown in FIG. 7 shows just an exemplary operation of the decision device 3. Thus, the processing steps shown in FIG. 7 may be performed in a different order as appropriate, an additional processing step may be performed as needed, or at least one of the processing steps may be omitted as appropriate. For example, the processing step S45-S48 of the learning mode may be performed after the processing step S49 of the fastening mode has been performed.

(4) Advantages

As described above, in the tool system 1 according to this embodiment, the decider 34 makes a decision about the life of the fastening unit 24 based on the correlation between a plurality of feature quantities of multiple different types. Thus, the tool system 1 according to this embodiment may improve the accuracy of decision compared to a situation where the decision is made based on only one type of feature quantity.

In addition, as described above, the decision device 3 includes the acquirer 32. The acquirer 32 includes an acquirer 32 that acquires the physical quantity while the fastening unit 24 is performing the fastening operation on the fastening member X1. This allows the decider 34 of the decision device 3 to acquire the physical quantity detected by the sensor unit 27 of the tool 2.

Furthermore, as described above, the tool 2 according to this embodiment is an impact wrench which is a portable handheld tool. The decider 34 makes, based on the correlation between a plurality of feature quantities of multiple different types, a decision about the life of the fastening unit 24. This contributes to improving the accuracy of the decision made about the life of the fastening unit 24 provided for the portable tool 2 to be used by various workers.

Furthermore, as described above, the decider 34 according to this embodiment is provided for the decision device 3 (decision system 100), which is a device different from the tool 2 including the fastening unit 24. Having the decision processing done by the decision device 3 with higher processing performance than the tool 2 allows, even if the criterion information has a large data size, for example, the decision to be made in a shorter time than having the decision processing done by the tool 2. In addition, the tool system 1 may also be used with an additional tool 2 newly added thereto. The decider 34 may also make a decision about the life of the fastening unit 24 provided for the newly added tool 2 without newly setting any criterion information.

Furthermore, as described above, the decision device 3 includes the setter 33. The setter 33 extracts the criterion correlation from the physical quantity that has been detected by the sensor unit 27 during the fastening operation in which the fastening unit 24 has fastened the fastening member X1 properly. The setter 33 sets the criterion information based on the criterion correlation thus extracted and makes the storage device 35 store the criterion information. In a tool system 1 for fastening a fastening member X1 made of any of various materials including aluminum and iron, for example, the criterion information is set based on the actually measured physical quantity detected during the fastening operation in which the fastening unit 24 has fastened the fastening member X1 properly. Consequently, this improves the accuracy of the criterion information.

Furthermore, as described above, the setter 33 extracts a plurality of criterion correlations (a plurality of criterion correlations) from a plurality of physical quantities that have been detected by the sensor unit 27 during a plurality of fastening operations (e.g., the first fastening operation and the second fastening operation) in which the fastening unit 24 has fastened the plurality of fastening members X1 properly. In addition, the setter 33 also extracts a plurality of criterion correlations from a plurality of physical quantities that have been detected by the sensor unit 27 during a plurality of fastening operations (e.g., the first fastening operation and the third fastening operation) in which the respective fastening units 24 of a plurality of tools (2a, 2b) have fastened the plurality of fastening members X1 properly. Then, the setter 33 sets the criterion information based on the plurality of criterion correlations thus extracted. Making the setter 33 set the criterion information based on a plurality of the criterion correlations further improves the accuracy of the criterion information.

Furthermore, as described above, making the setter 33 set the decision range R1 based on the plurality of the criterion correlations allows a decision range R1 based on a plurality of criterion correlations (a plurality of criterion correlations) to be set for the criterion information. The decider 34 makes the decision about the life of the fastening unit 24 depending on whether the actually measured correlation extracted from the physical quantity for decision falls within the decision range R1 or not. The decider 34 makes the decision depending on whether the actually measured correlation falls within the decision range R1 or not, thus enabling making the decision by a simple method.

Furthermore, as described above, the fastening unit 24 includes the impact mechanism 244. The impact mechanism 244 is configured to be driven with the motive power supplied from the motor 243 and apply impacting force to the socket 242 (tip tool). In addition, the plurality of criterion feature quantities and the plurality of actually measured feature quantities include at least the voltage to be applied to the motor 243 (motor voltage) and an impact cycle (number of impacts applied for revolution). The decider 34 makes the decision about the life of the fastening unit 24 based on the correlation between the motor voltage (voltage between the battery terminals) and the impact cycle (number of impacts applied for revolution), thus further improving the accuracy of decision.

Furthermore, as described above, the physical quantity detected by the sensor unit 27 includes the current waveform of the motor 243 (i.e., the waveform of the current detection resistor voltage) and the voltage waveform of the motor 243 (i.e., the waveform of the voltage between battery terminals). This allows a plurality of feature quantities based on relatively easily available physical quantities, such as the current and voltage waveforms of the motor 243 while the fastening unit 24 is performing the fastening operation on the fastening member X1, to be used to make the decision, thus making it easier to make the decision.

(5) Variations

Next, variations of the exemplary embodiment will be enumerated one after another. Note that the variations to be described below may be adopted in combination as appropriate.

The functions of the tool system 1 according to the exemplary embodiment may also be implemented as, for example, a decision method, a (computer) program, or a non-transitory storage medium that stores the program thereon.

The decision system 100 according to the present disclosure includes a computer system in the controller 30 thereof, for example. The computer system may include a processor and a memory as principal hardware components thereof. The functions of the decision system 100 according to the present disclosure may be performed by making the processor execute a program stored in the memory of the computer system. The program may be stored in advance in the memory of the computer system. Alternatively, the program may also be downloaded through a telecommunications line or be distributed after having been recorded in some non-transitory storage medium such as a memory card, an optical disc, or a hard disk drive, any of which is readable for the computer system. The processor of the computer system may be made up of a single or a plurality of electronic circuits including a semiconductor integrated circuit (IC) or a large-scale integrated circuit (LSI). As used herein, the "integrated circuit" such as an IC or an LSI is called by a different name depending on the degree of integration thereof. Examples of the integrated circuits such as an IC or an LSI include a system LSI, a very-large-scale integrated circuit (VLSI), and an ultra-large-scale integrated circuit (ULSI). Optionally, a field-programmable gate array (FPGA) to be programmed after an LSI has been fabricated or a reconfigurable logic device allowing the connections or circuit sections inside of an LSI to be reconfigured may also be adopted as the processor. Those electronic circuits may be either integrated together on a single chip or distributed on multiple chips, whichever is appropriate. Those multiple chips may be aggregated together in a single device or distributed in multiple devices without limitation. As used herein, the "computer system" includes a microcontroller including one or more processors and one or more memories. Thus, the microcontroller may also be implemented as a single or a plurality of electronic circuits including a semiconductor integrated circuit or a large-scale integrated circuit.

Also, the decision system 100 only needs to include at least the acquirer 32, the decider 34, and the storage device 35. In the exemplary embodiment described above, at least some functions of the decision system 100 are aggregated together in a single housing (decision device 3). However, this is not an essential configuration for the decision system 100. Alternatively, the constituent elements of the decision system 100 may be distributed in multiple different housings.

The tool 2 only needs to include at least the fastening unit 24 and the sensor unit 27. In the exemplary embodiment described above, at least some functions of the tool 2 are aggregated together in a single housing. However, this is not an essential configuration for the tool 2. Alternatively, the constituent elements of the tool 2 may be distributed in multiple different housings.

For example, some functions (such as the decider 34) of the controller 30 and the storage device 35 may be provided in a housing (such as the tool 2) different from the decision device 3. Optionally, at least some functions (such as the decider 34) of the controller 30 and the storage device 35 may be implemented as, for example, a server and a cloud computing system.

The tool system 1 does not have to be used on an assembly line on which a workpiece is subjected to assembling operations at a factory but may also be used for any other purposes.

In the embodiment described above, the tool 2 is an impact wrench. However, the tool 2 does not have to be an impact wrench. Alternatively, the tool 2 may also be a screwdriver (including an impact screwdriver) for use to fasten screws (as fastening members X1), for example. In that case, a bit (such as a screwdriver bit) is attached to the tool 2 instead of the socket 242. Furthermore, the tool 2 is not necessarily configured to be powered by the battery pack 201 but may also be configured to be powered by an AC power supply (commercial power supply).

Furthermore, the indicator 211 does not have to be a light-emitting unit such as an LED but may also be implemented as an image display device such as a liquid crystal display or an organic electroluminescent (EL) display. Optionally, the tool 2 (tool system 1) may include, as a notification unit for making a notification of the result of decision, a sound emission unit instead of, or in addition to, the indicator 211. That is to say, the notification unit may make notification (presentation) by any means other than displaying. For example, the notification unit may also be implemented as a sound emission unit such as loudspeaker or a buzzer that emits a sound. The "sound" to be emitted may be an electronic sound such as a beep or an artificial voice saying, "it is about time to replace." In that case, the controller 26 preferably makes the notification unit emit different sounds in a situation where the fastening unit 24 is operating properly and in a situation where the fastening unit 24 has deteriorated so much as to need replacement. Still alternatively, the notification unit may also be implemented as, for example, a vibrator that produces vibration or a transmitter for transmitting a notification signal to an external terminal (such as a mobile communications device) provided outside of the tool 2. Optionally, the notification unit may also have, in combination, two or more functions selected from displaying, emitting a sound, producing vibration, and establishing communication.

Optionally, the sensor unit 27 of the tool 2 may include a torque sensor for measuring the fastening torque. In that case, the controller 26 controls the fastening unit 24 such that the fastening torque measured by the torque sensor becomes equal to the torque setting.

The physical quantity to be detected by the sensor unit 27 preferably includes at least one of the voltage waveform of the current detection resistor voltage (i.e., the current waveform of the motor 243) or the voltage waveform of the voltage between the battery terminals (i.e., the voltage waveform of the motor 243). Alternatively, the sensor unit 27 may detect the voltage to be applied to the motor 243 instead of detecting the voltage waveform of the voltage between the battery terminals.

The plurality of criterion feature quantities and the plurality of actually measured feature quantities do not have to include all of the first to sixth feature quantities but may include two or more feature quantities selected from the first to sixth feature quantities. For example, the plurality of criterion feature quantities and the plurality of actually measured feature quantities preferably include at least the first feature quantity (the average value of the motor voltage) and the second feature quantity (either the impact cycle or the number of impacts applied for revolution).

Furthermore, the first to sixth feature quantities are not limited to the ones adopted as examples in the foregoing description of embodiments. For example, the second feature quantity may also be an angle of lead of the fastening member X1 when impacting force is applied thereto. The "angle of lead" as used herein is determined by the number of impacts applied for revolution, the number of revolutions (rotational velocity) of the motor as extracted from the voltage waveform of a hall sensor voltage, and the gear ratio of the speed reducer mechanism.

Optionally, the tool system 1 may also make the decision about the life of the fastening unit 24 using not only the first to sixth feature quantities but also another feature quantity (e.g., a seventh feature quantity) as well. For example, the number of revolutions of the motor as extracted from the voltage waveform of the hall sensor voltage may be used as the seventh feature quantity. If the seventh feature quantity is the number of revolutions of the motor, then the tool system 1 may make a decision about the life of the fastening unit 24 based on, for example, the correlation between the second feature quantity (number of impacts applied for revolution) and the seventh feature quantity (number of revolutions of the motor).

The threshold value for use to define the decision range R1 may be set by the setter 33 instead of being set by the user. For example, the setter 33 may set the decision range R1 using, as a threshold value, the maximum Mahalanobis' distance out of the plurality of Mahalanobis' distances of the plurality of criterion correlations stored in the storage device 35. The setter 33 may set the decision range R1 with the maximum Mahalanobis' distance used as a criterion. The threshold value for use to define the decision range R1 may be obtained by, for example, multiplying the maximum Mahalanobis' distance by a predetermined coefficient.

Optionally, the setter 33 may use machine learning for setting the decision range R1. Specifically, the setter 33 may set the decision range R1 using a learned model to be generated by a machine learning algorithm introduced into an artificial intelligence (AI). As used herein, the "learned model" is a model generated, based on learning data (i.e., physical quantity for learning), by a computer system following a learning program.

In the embodiment described above, the Mahalanobis' distance is supposed to be used as a cluster analysis technique, i.e., as a "distance" from a group of normal data. However, this is only an example and should not be construed as limiting. Alternatively, the decider 34 may also make the decision about the life of the fastening unit 24 based on the correlation between two or more feature quantities, selected from a plurality of feature quantities of multiple different types, without using the Mahalanobis' distance.

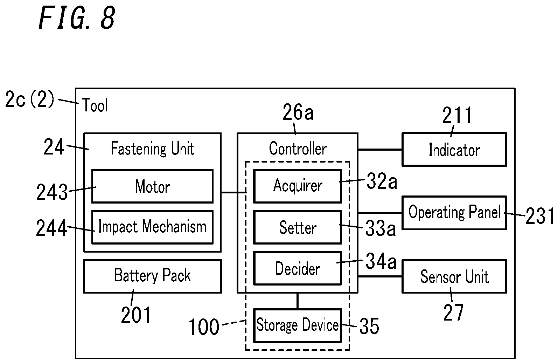

Alternatively, the tool 2 (2c) may include at least some functions of the decision system 100 as shown in FIG. 8. In the example shown in FIG. 8, a controller 26a of the tool 2c includes an acquirer 32a, a setter 33a, and a decider 34a.

The acquirer 32a acquires the physical quantity detected by the sensor unit 27 while the fastening unit 24 is performing the fastening operation on the fastening member X1. After having acquired the physical quantity that has been detected by the sensor unit 27, the acquirer 32a operates differently according to the operation mode of the tool 2c. Specifically, if the operation mode of the tool 2c is the fastening mode, the acquirer 32a outputs the physical quantity thus acquired to the decider 34a. On the other hand, if the operation mode of the tool 2c is the learning mode, then the acquirer 32a makes the user enter an answer to the question of whether the fastening unit 24 is operating properly. If a decision has been made that the fastening unit 24 be operating properly, then the acquirer 32a outputs the physical quantity thus acquired to the setter 33a.

The setter 33a sets the criterion information based on a plurality of criterion feature quantities extracted from the physical quantity provided by the acquirer 32a. The setter 33a operates in substantially the same way as the setter 33 according to the exemplary embodiment described above.

The decider 34a makes a decision about the life of the fastening unit 24 based on the criterion information stored in the storage device 35 and the plurality of actually measured feature quantities extracted from the physical quantity that has been provided by the acquirer 32a. The decider 34a operates in substantially the same way as the decider 34 according to the exemplary embodiment described above.

The controller 26a lights the indicator 211 differently according to the result of decision made by the decider 34a about the life of the fastening unit 24.

(Recapitulation)

As can be seen from the foregoing description, a tool system (1) according to a first aspect includes a fastening unit (24), a sensor unit (27), a storage device (35), and a decider (34; 34a). The fastening unit (24) fastens a fastening member (X1) by driving a tip tool (socket 242) in rotation with motive power supplied from a motor (243). The sensor unit (27) detects a physical quantity while the fastening unit (24) is performing a fastening operation on the fastening member (X1). The storage device (35) stores criterion information. The criterion information has been set based on a criterion correlation between a plurality of criterion feature quantities. The plurality of criterion feature quantities are a plurality of feature quantities of multiple different types and used as criteria for making a decision about life of the fastening unit (24). The decider (34; 34a) makes the decision about the life of the fastening unit (24) in accordance with the criterion information and an actually measured correlation. The actually measured correlation is a correlation between a plurality of actually measured feature quantities. The plurality of actually measured feature quantities are a plurality of feature quantities respectively corresponding to the multiple different types of the plurality of criterion feature quantities and are based on the physical quantity detected by the sensor unit (27).

According to this aspect, a decision about the life of the fastening unit (24) is made based on the correlation between a plurality of feature quantities of multiple different types. This contributes to improving the accuracy of the decision made about the life compared to a situation where the decision is made based on only one type of feature quantity.

In a tool system (1) according to a second aspect, which may be implemented in conjunction with the first aspect, the fastening unit (24) is provided for a handheld tool (2).

This aspect contributes to improving the accuracy of the decision made about the life of the fastening unit (24) provided for a handheld tool (2) to be used by various users (workers).

In a tool system (1) according to a third aspect, which may be implemented in conjunction with the first or second aspect, the decider (34; 34a) is provided for a device (decision device 3) different from a tool (2) including the fastening unit (24).

This aspect allows, even if the criterion information has a large data size, the decision to be made in a short time by having the processing done by, for example, an external device (decision device 3) with relatively high processing performance. In addition, this aspect also enables, even if another tool (2) is newly added to the tool system (1), making the decision without newly acquiring any physical quantity to collect the criterion information.

A tool system (1) according to a fourth aspect, which may be implemented in conjunction with any one of the first to third aspects, further includes a setter (33; 33a). The setter (33; 33a) extracts the criterion correlation from the physical quantity that has been detected by the sensor unit (27) during the fastening operation in which the fastening unit (24) has fastened the fastening member (X1) properly. The setter (33; 33a) sets the criterion information based on the criterion correlation thus extracted and makes the storage device (35) store the criterion information.

According to this aspect, for a tool system (1) for fastening a fastening member (X1) made of any of various materials such as aluminum and iron, for example, the criterion information is set based on the physical quantity detected during the fastening operation in which the fastening unit (24) has fastened the fastening member (X1). Consequently, this improves the accuracy of the criterion information.

In a tool system (1) according to a fifth aspect, which may be implemented in conjunction with the fourth aspect, the setter (33; 33a) extracts a plurality of the criterion correlations from a plurality of the physical quantities that have been detected by the sensor unit (27) during a plurality of the fastening operations in which the fastening unit (24) has fastened a plurality of the fastening members (X1) properly. The setter (33; 33a) sets the criterion information based on the plurality of the criterion correlations thus extracted.

This aspect further improves the accuracy of the criterion information by setting the criterion information based on a plurality of the criterion correlations.

A tool system (1) according to a sixth aspect, which may be implemented in conjunction with the fourth or fifth aspect, includes a plurality of the fastening units (24) and a plurality of the sensor units (27) corresponding one to one to the plurality of the fastening units (24). The setter (33; 33a) extracts a plurality of the criterion correlations from a plurality of the physical quantities that have been detected by the plurality of the sensor units (27) during a plurality of the fastening operations in which the plurality of the fastening units (24) have fastened a plurality of the fastening members (X1) properly. The setter (33; 33a) sets the criterion information based on the plurality of the criterion correlations thus extracted.

This aspect further improves the accuracy of the criterion information by setting the criterion information based on a plurality of the physical quantities detected during a plurality of the fastening operations performed by a plurality of fastening units (24).

In a tool system (1) according to a seventh aspect, which may be implemented in conjunction with the fifth or sixth aspect, the criterion information includes a decision range (R1) that has been set based on the plurality of the criterion correlations. The decider (34; 34a) makes the decision depending on whether the actually measured correlation falls within the decision range (R1) or not.

According to this aspect, the decider (34) makes the decision depending on whether the actually measured correlation falls within the decision range (R1) or not, thus enabling making the decision by a simple method.

In a tool system (1) according to an eighth aspect, which may be implemented in conjunction with any one of the first to seventh aspects, the life is related to a degree of wear to be caused to a particular part (Z1) of the fastening unit (24) through a plurality of the fastening operations performed by the fastening unit (24).

This aspect improves the accuracy of the decision made about the life of a worn part.

In a tool system (1) according to a ninth aspect, which may be implemented in conjunction with any one of the first to eighth aspects, the physical quantity includes at least one of a current waveform of the motor (243) or a voltage waveform of the motor (243).

This aspect allows a plurality of feature quantities based on relatively easily available physical quantities, such as the current and voltage waveforms of the motor (243) while the fastening unit (24) is performing the fastening operation on the fastening member (X1), to be used to make the decision, thus making it easier to make the decision.

A decision system (100) according to a tenth aspect includes an acquirer (32; 32a), a storage device (35), and a decider (34; 34a). The acquirer (32; 32a) acquires a physical quantity while a tool (2) is performing a fastening operation on a fastening member (X1). The tool (2) includes a fastening unit (24) that fastens the fastening member (X1) by driving a tip tool (socket 242) in rotation with motive power supplied from a motor (243). The storage device (35) stores criterion information. The criterion information has been set based on a criterion correlation between a plurality of criterion feature quantities. The plurality of criterion feature quantities are a plurality of feature quantities of multiple different types and are used as criteria for making a decision about life of the fastening unit (24). The decider (34; 34a) makes the decision about the life of the fastening unit (24) in accordance with the criterion information and an actually measured correlation. The actually measured correlation is a correlation between a plurality of actually measured feature quantities. The plurality of actually measured feature quantities are a plurality of feature quantities respectively corresponding to the multiple different types of the plurality of criterion feature quantities and are based on the physical quantity acquired by the acquirer (32; 32a).

According to this aspect, the decision system (100) makes a decision about the life of the fastening unit (24) based on the correlation between a plurality of feature quantities of multiple different types. This contributes to improving the accuracy of the decision compared to a situation where the decision is made based on only one type of feature quantity.

A decision method according to an eleventh aspect is to be applied to a tool (2) including a fastening unit (24) that fastens a fastening member (X1) by driving a tip tool (socket 242) in rotation with motive power supplied from a motor (243). The decision method includes acquisition processing and decision processing. The acquisition processing includes acquiring a physical quantity while the tool (2) is performing a fastening operation on the fastening member (X1). The decision processing includes making a decision about life of the fastening unit (24) in accordance with criterion information and an actually measured correlation. The criterion information has been set based on a criterion correlation between a plurality of criterion feature quantities. The plurality of criterion feature quantities are a plurality of feature quantities of multiple different types and are used as criteria for making the decision about the life of the fastening unit (24). The actually measured correlation is a correlation between a plurality of actually measured feature quantities. The plurality of actually measured feature quantities are a plurality of feature quantities respectively corresponding to the multiple different types of the plurality of criterion feature quantities and are based on the physical quantity acquired in the acquisition processing.

According to this aspect, a decision about the life of the fastening unit (24) is made based on the correlation between a plurality of feature quantities of multiple different types. This contributes to improving the accuracy of the decision compared to a situation where the decision is made based on only one type of feature quantity.

A program according to a twelfth aspect is designed to cause one or more processors to perform the decision method according to the eleventh aspect.

This aspect provides a function contributing to improving the accuracy of the decision made about the life.

Note that the constituent elements according to the second to tenth aspects are not essential constituent elements for the tool system (1) but may be omitted as appropriate.

**Reference Signs List**

| | |
|---|---|
| 1 | Tool System |
| 2 | Tool |
| 24 | Fastening Unit |
| 242 | Socket (Tip Tool) |
| 243 | Motor |
| 27 | Sensor Unit |
| 3 | Decision Device (Different Device) |
| 32, 32a | Acquirer |
| 33, 33a | Setter |
| 34, 34a | Decider |
| 35 | Storage Device |
| 100 | Decision System |
| R1 | Decision Range |
| X1 | Fastening Member |
| Z1 | Particular Part |

**Claims**

**1.** A tool system comprising:

a fastening unit configured to fasten a fastening member by driving a tip tool in rotation with motive power supplied from a motor;
a sensor unit configured to detect a physical quantity while the fastening unit is performing a fastening operation on the fastening member;
a storage device configured to store criterion information that has been set based on a criterion correlation between a plurality of criterion feature quantities, the plurality of criterion feature quantities being a plurality of feature quantities of multiple different types, the plurality of criterion feature quantities being used as criteria for making a decision about life of the fastening unit; and
a decider configured to make the decision about the life of the fastening unit in accordance with not only the criterion information but also an actually measured correlation between a plurality of actually measured feature quantities, the plurality of actually measured feature quantities being a plurality of feature quantities respectively corresponding to the multiple different types of the plurality of criterion feature quantities, the plurality of actually measured feature quantities being based on the physical quantity detected by the sensor unit.

**2.** The tool system of claim 1, wherein
the fastening unit is provided for a handheld tool.

**3.** The tool system of claim 1 or 2, wherein
the decider is provided for a device different from a tool including the fastening unit.

**4.** The tool system of any one of claims 1 to 3, further comprising a setter configured to extract the criterion correlation from the physical quantity that has been detected by the sensor unit during the fastening operation in which the fastening unit has fastened the fastening member properly, the setter being configured to set the criterion information based on the criterion correlation thus extracted and make the storage device store the criterion information.

**5.** The tool system of claim 4, wherein
the setter is configured to extract a plurality of the criterion correlations from a plurality of the physical quantities that have been detected by the sensor unit during a plurality of the fastening operations in which the fastening unit has fastened a plurality of the fastening members properly and set the criterion information based on the plurality of the criterion correlations thus extracted.

**6.** The tool system of claim 4 or 5, comprising:

a plurality of the fastening units; and
a plurality of the sensor units corresponding one to one to the plurality of the fastening units, wherein
the setter is configured to extract a plurality of the criterion correlations from a plurality of the physical quantities
that have been detected by the plurality of the sensor units during a plurality of the fastening operations in which
the plurality of the fastening units have fastened a plurality of the fastening members properly and set the
criterion information based on the plurality of the criterion correlations thus extracted.

7. The tool system of claim 5 or 6, wherein

the criterion information includes a decision range that has been set based on the plurality of the criterion
correlations, and
the decider is configured to make the decision depending on whether the actually measured correlation falls
within the decision range or not.

8. The tool system of any one of claims 1 to 7, wherein
the life is related to a degree of wear to be caused to a particular part of the fastening unit through a plurality of the
fastening operations performed by the fastening unit.

9. The tool system of any one of claims 1 to 8, wherein
the physical quantity includes at least one of a current waveform of the motor or a voltage waveform of the motor.

10. A decision system comprising:

an acquirer configured to acquire a physical quantity while a tool is performing a fastening operation on a
fastening member, the tool including a fastening unit configured to fasten the fastening member by driving a tip
tool in rotation with motive power supplied from a motor;
a storage device configured to store criterion information that has been set based on a criterion correlation
between a plurality of criterion feature quantities, the plurality of criterion feature quantities being a plurality of
feature quantities of multiple different types, the plurality of criterion feature quantities being used as criteria for
making a decision about life of the fastening unit; and
a decider configured to make the decision about the life of the fastening unit in accordance with not only the
criterion information but also an actually measured correlation between a plurality of actually measured feature
quantities, the plurality of actually measured feature quantities being a plurality of feature quantities respectively
corresponding to the multiple different types of the plurality of criterion feature quantities, the plurality of actually
measured feature quantities being based on the physical quantity acquired by the acquirer.

11. A decision method to be applied to a tool including a fastening unit, the fastening unit being configured to fasten a
fastening member by driving a tip tool in rotation with motive power supplied from a motor, the decision method
comprising:

acquisition processing including acquiring a physical quantity while the tool is performing a fastening operation
on the fastening member; and
decision processing including making a decision about life of the fastening unit in accordance with not only
criterion information but also an actually measured correlation between a plurality of actually measured feature
quantities, the criterion information having been set based on a criterion correlation between a plurality of
criterion feature quantities, the plurality of criterion feature quantities being a plurality of feature quantities of
multiple different types, the plurality of criterion feature quantities being used as criteria for making the decision
about the life of the fastening unit, the plurality of actually measured feature quantities being a plurality of feature
quantities respectively corresponding to the multiple different types of the plurality of criterion feature quantities,
the plurality of actually measured feature quantities being based on the physical quantity acquired in the acquisition processing.

12. A program designed to cause one or more processors to perform the decision method of claim 11.

## FIG. 1A

1

Tool System

2a
(2)  Tool

24  Fastening Unit

243  Motor

244  Impact Mechanism

26  Controller

201  Battery Pack

25  Communications Interface

211  Indicator

231  Operating Panel

27  Sensor Unit

3 (100)  Decision Device

31  Communications Interface

30  Controller

32  Acquirer

33  Setter

34  Decider

35  Storage Device

2b (2)  Tool

## FIG. 1B

241

244  244B

244A

Z1

FIG. 2B

FIG. 2A

FIG. 3

Current Detection Resistor Voltage

Voltage between Battery Terminals

Shock Sensor Voltage

Hall Sensor Voltage

t1  t2 t3 t4  t5

EP 4 353 415 A1

## FIG. 4 A

Number of Revolutions [rpm]
(Second Feature Quantity)

Battery Voltage [v]
(First Feature Quantity)

## FIG. 4 B

Number of Revolutions [rpm]
(Second Feature Quantity)

Motor Current [I1]
(Third Feature Quantity)

## FIG. 5

FIG. 6

START

S21 Mode? — Learning Mode

S22 | Fastening Mode
Fastening operation

S23
Acquire physical quantity

S24
Transmit physical quantity

S25
Receive result of decision

S26 Operating properly? — No

S27 | Yes
Notify it operates properly

S28
Notify it is time to replace

S29
Fastening operation

S30
Acquire physical quantity

S31
Transmit physical quantity

END

## FIG. 7

```
                    ┌─────────────┐
                    │    START    │
                    └──────┬──────┘
                           │
                           ▼
S41            ◇─────────────────────◇  No
              ╱  Acquired physical     ╲────┐
              ╲      quantity?         ╱    │
               ◇─────────────────────◇     │
                           │ Yes            │
                           ▼                │
S42            ◇─────────────────────◇ Fastening Mode
              ╱        Mode?           ╲──────────┐
              ╲                        ╱          │
               ◇─────────────────────◇           │
                    │ Learning Mode              │
                    ▼                            ▼
S43  ┌──────────────────────────┐  S49 ┌──────────────────────┐
     │Extract criterion feature │      │ Extract actually     │
     │       quantities         │      │ measured feature     │
     └────────────┬─────────────┘      │    quantities        │
                  ▼                     └──────────┬───────────┘
S44  ┌──────────────────────────┐  S50            ▼
     │Store information in       │      ┌──────────────────────┐
     │   storage device         │      │Calculate Mahalanobis'│
     └────────────┬─────────────┘      │     distance         │
                  ▼                     └──────────┬───────────┘
S45  ┌──────────────────────────┐                 ▼
     │Calculate variance-       │  S51   ◇─────────────────◇  No
     │covariance matrix         │       ╱  Fall within      ╲────┐
     └────────────┬─────────────┘       ╲ decision range?  ╱     │
                  ▼                       ◇───────────────◇      │
S46  ┌──────────────────────────┐              │ Yes            │
     │ Calculate inverse matrix │  S52         ▼         S54    ▼
     └────────────┬─────────────┘     ┌──────────────────┐  ┌──────────────────────┐
                  ▼                    │Decide it operate │  │Decide it be time to  │
S47  ┌──────────────────────────┐     │    properly      │  │      replace         │
     │    Set decision range    │     └────────┬─────────┘  └──────────┬───────────┘
     └────────────┬─────────────┘  S53          ▼                      │
                  ▼                    ┌──────────────────────┐◄────────┘
S48  ┌──────────────────────────┐     │Transmit result of    │
     │Update criterion          │     │    decision          │
     │   information            │     └──────────┬───────────┘
     └────────────┬─────────────┘                │
                  ▼                               │
                  └───────────────┬──────────────┘
                                  ▼
                           ┌─────────────┐
                           │     END     │
                           └─────────────┘
```

## FIG. 8

**INTERNATIONAL SEARCH REPORT**

International application No.

**PCT/JP2022/012370**

**A. CLASSIFICATION OF SUBJECT MATTER**

**B25B 23/14**(2006.01)i; **G05B 19/418**(2006.01)i
FI: B25B23/14 640B; B25B23/14 620A; B25B23/14 620C; G05B19/418 Z

According to International Patent Classification (IPC) or to both national classification and IPC

**B. FIELDS SEARCHED**

Minimum documentation searched (classification system followed by classification symbols)

B25B23/14; G05B19/418

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2009-83002 A (PANASONIC ELECTRIC WORKS CO LTD) 23 April 2009 (2009-04-23) entire text, all drawings | 1-12 |
| A | JP 2021-71818 A (JTEKT CORP) 06 May 2021 (2021-05-06) entire text, all drawings | 1-12 |

☐ Further documents are listed in the continuation of Box C. ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 June 2022** | **14 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/012370**

| Patent document cited in search report | | | Publication date (day/month/year) | Patent family member(s) | Publication date (day/month/year) |
|---|---|---|---|---|---|
| JP | 2009-83002 | A | 23 April 2009 | (Family: none) | |
| JP | 2021-71818 | A | 06 May 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016091316 A